# EUROPÄISCHE PATENTANMELDUNG

(11) **EP 4 765 521 A1**
(43) Veröffentlichungstag der Anmeldung: **24.06.2026**
(21) Anmeldenummer: 24220645.6
(22) Anmeldetag: 17.12.2024
(51) Int. Cl.: H01R 43/055, B23B 29/04, B25B 1/00, B23Q 1/00, B23Q 3/18, B23D 33/02

(54) **WERKSTÜCK-LOCATOR SOWIE CRIMPWERKZEUG, PRESSWERKZEUG ODER ABISOLIERWERKZEUG**

(71) Anmelder: WEZAG GmbH & Co. KG, 35260 Stadtallendorf (DE)
(72) Erfinder: Glockseisen, Thomas, 40217 Düsseldorf (DE); Lerch, Thomas, 34613 Schwalmstadt (DE)
(74) Vertreter: REHBERG HÜPPE + PARTNER

(57) **Zusammenfassung**

Die Erfindung betrifft einen Werkstück-Locator (10), der einen Tragkörper (11) aufweist, mit dem der Werkstück-Locator (10) an einem Werkzeugkopf (3) befestigt werden kann. Der Werkstück-Locator (10) verfügt über einen Haltekörper (12), der mit einem Dreh-Freiheitsgrad (15) gegenüber dem Tragkörper (11) bewegbar ist. Des Weiteren verfügt Werkstück-Locator (10) über einen Positionierkörper (14), der eine Aufnahme (56) für ein zu bearbeitendes Werkstück aufweist. Der Positionierkörper (14) ist mit einem weiteren Dreh-Freiheitsgrad (20) gegenüber dem Haltekörper (12) bewegbar. Auf diese Weise kann die Bedienung des Werkstück-Locators (10) vereinfacht werden und/oder es kann ein multifunktionaler Werkstück-Locator (10) bereitgestellt werden. Möglich ist auch, dass mindestens zwei andere Freiheitsgrade (17, 18) zwischen dem Tragkörper (11) und dem Positionierkörper (14) vorgesehen sind.

## Beschreibung

Die Erfindung betrifft einen Werkstück-Locator, der Einsatz findet für ein Werkzeug oder als Bestandteil eines Werkzeugs. Mittels des Werkzeugs erfolgt eine Bearbeitung eines Werkstücks mit Bearbeitungskörpern. Das Werkzeug kann dabei als Crimpwerkzeug ausgebildet sein, bei dem die Bearbeitungskörper ein Paar von Crimpgesenkhälften ausbildet. Mittels eines derartigen Crimpwerkzeugs erfolgt ein Vercrimpen eines Werkstücks, wobei ein Vercrimpen eines Steckers mit einem Leiter erfolgen kann und beispielweise ein sogenannter Isolationscrimp und/oder ein Leitercrimp herbeigeführt werden kann. Ebenfalls möglich ist, dass das Werkzeug ein Presswerkzeug ist. In diesem Fall weisen die Bearbeitungskörper Pressgesenkhälften auf. Mittels eines derartigen Presswerkzeugs können insbesondere Fittinge mit Rohren verpresst werden. Möglich ist auch, dass es sich bei dem Werkzeug um ein Abisolierwerkzeug handelt. In diesem Fall weisen die Bearbeitungskörper ein Abisoliermesser auf. Mittels eines derartigen Abisolierwerkzeugs kann insbesondere ein Abisolieren eines Endabschnitts eines Leiters erfolgen. Das Werkzeug kann auch ein multifunktionales Werkzeug sein, welches bspw. sowohl für ein Abisolieren als auch für ein Crimpen verwendet werden kann.

Möglich ist, dass Werkzeug als manuelle betätigtes Handwerkzeug oder Handzange, als ein pneumatisch, hydraulisch oder elektrisch betriebenes Handwerkzeug oder als pneumatisch, hydraulisch oder elektrisch betriebene stationäre Maschine ausgebildet ist.

Bei Werkzeugen der beschriebenen Typen finden Werkstück-Locator Einsatz, die auch als Werkstück-Positionierer bezeichnet werden können. Mittels des Werkstück-Locators wird das Werkstück vor der Herbeiführung des Bearbeitungsvorgangs, bei dem die Bearbeitungskörper über einen Arbeitshub aufeinander zu bewegt werden und die Bearbeitung des Werkstücks durch Pressen, Crimpen oder Schneiden erfolgt, in eine vorbestimmte Relativposition und/oder Orientierung zu dem Werkzeug und den Bearbeitungskörpern gebracht. Möglich ist alternativ oder kumulativ, dass der Werkstück-Locators das Werkstück während des Arbeitshubs und bei den auf das Werkstück von den Bearbeitungskörpern ausgeübten Kräften in einer vorbestimmten Position und/oder Orientierung gegenüber dem Werkzeug hält oder sichert.

Der Werkstück-Locator kann beispielsweise einen Anschlag aufweisen, der eine Einlegetiefe des Werkstücks in das Werkzeug vorgibt. Alternativ oder kumulativ kann der Werkstück-Locator eine Aufnahme aufweisen, in die das Werkstück eingesetzt werden kann und die als Ausnehmung ausgebildet sein kann, wobei die Aufnahme das Werkstück entlang des gesamten Umfangs umgeben oder abstützen kann oder lediglich in einem Teilumfang. Der Boden oder ein Absatz der Aufnahme kann dabei auch eine Position des Werkstücks vorgeben, indem dieser die Einlegetiefe des Werkstücks in die Aufnahme des Werkstück-Locators vorgibt. Die Aufnahme kann auch die Orientierung des Werkstücks vorgeben.

### STAND DER TECHNIK

DE 10 2008 017 366 A1 offenbart einen Werkzeug-Locator für eine Crimpzange. Der Werkstück-Locator ist um eine Klappachse, die parallel zur Zangenkopfebene sowie vertikal zu einer Crimpachse orientiert ist, auf- und zuklappbar zwischen einer Einlegestellung und einer Arbeitsstellung. In der Einlegestellung ist die Aufnahme von der Zangenkopfebene weggeklappt, sodass ein einfaches Einlegen des Werkstücks in die Aufnahme des Werkstück-Locators möglich ist. Hingegen ist in der Arbeitsstellung der Werkstück-Locator an die Zangenkopfebene herangeklappt. In der Arbeitsstellung befindet sich die Aufnahme mit dem darin aufgenommenen Werkstück unmittelbar benachbart zu den Bearbeitungskörpern, und die Aufnahmeachse der Aufnahme (und somit auch das darin angeordnete Werkstück) ist koaxial zu der Gesenkachse des von den beiden Bearbeitungskörpern gemeinsam gebildeten Crimpgesenks angeordnet.

EP 3 300 187 B1 offenbart einen Werkstück-Locator für eine Crimpzange mit einem entsprechenden Klapp-Freiheitsgrad. In diesem Fall verfügt der Werkstück-Locator über eine Arretiereinrichtung, mittels welcher ein Verrasten oder Einspannen des Werkstücks in der Aufnahme des Werkstück-Locators möglich ist. Die Bearbeitungskörper der Crimpzange verfügen über mehrere nebeneinander angeordnete Paare von Crimpgesenkhälften, die paarweise mehrere Crimpgesenke bilden. Die Crimpgesenke verfügen über unterschiedliche Gesenkkonturen, so dass mit diesen unterschiedliche Typen und/oder Geometrien von Werkstücken vercrimpt werden können. Entsprechend verfügt der Werkstück-Locator über mehrere, mit entsprechenden Abständen nebeneinander angeordnete Aufnahmen für Werkstücke.

EP 2 463 969 B1 offenbart ebenfalls eine Crimpzange, bei der die Bearbeitungskörper mehrere nebeneinander angeordnete Paare von Crimpgesenkhälften aufweisen. Hier verfügt der Werkstück-Locator lediglich über eine Aufnahme für ein Werkstück. In diesem Fall ist aber ein die Aufnahme ausbildender Positionierkörper des Werkstück-Locators so verschieblich an einem an dem Zangenkopf befestigten Tragkörper des Werkstück-Locators gehalten, dass die Aufnahme in unterschiedlichen Betriebsstellungen des Positionierkörpers relativ zu dem Tragkörper jeweils hinter einem Paar der Crimpgesenkhälften angeordnet werden kann. Die Verschiebung des Positionierkörpers relativ zu dem Tragkörper erfolgt entlang eines Freiheitsgrades, der parallel zur Zangenkopfebene und vertikal zu der Crimpachse orientiert ist. Die Betriebsstellungen des Positionierkörpers können jeweils durch eine Verrastung oder eine Verriegelung gesichert werden. EP 2 463 969 B1 offenbart eine weitere Ausführungsform, bei welcher der Positionierkörper nicht translatorisch gegenüber dem Tragkörper verschieblich ist, sondern der Positionierkörper ein Drehrad ist, welches um eine Drehachse, die vertikal zur Zangenkopfebene angeordnet ist, in die unterschiedlichen Betriebsstellungen verdrehbar ist. Das Drehrad verfügt auf der dem Zangenkopf zugewandten Seitenfläche über Aufnahmen, die im gleichen Abstand von der Drehachse in Umfangsrichtung verteilt angeordnet sind. In den jeweiligen durch Drehen herbeigeführten Betriebsstellungen ist dann jeweils eine Aufnahme hinter dem Paar der Crimpgesenkhälften angeordnet.

EP 3 312 949 B1 beschreibt einerseits eine Crimpzange, bei der entsprechend EP 2 463 969 B1 ein Positionierkörper eines Werkstück-Locators verdrehbar ist um eine Drehachse, die vertikal zur Zangenkopfebene orientiert ist. Darüber hinaus offenbart EP 3 312 949 B1 eine Ausführungsform, bei der der Werkstück-Locator klappbar ist zwischen einer Arbeitsstellung und einer Einlegestellung, wobei in diesem Fall das Auf- und Zuklappen um eine Klappachse erfolgt, die parallel zur Zangenkopfebene sowie parallel zur Crimpachse orientiert ist.

WO 2019/013687 A1 offenbart einen Werkstück-Locator mit einem plattenförmigen Positionierkörper, der im Bereich seiner Schmalseiten nebeneinander mehrere Aufnahmen für ein Werkstück aufweist. Der Positionierkörper bildet eine Art Schlitten, der mit einem translatorischen Freiheitsgrad in dem Werkstück-Locator geführt ist, der vertikal zu der Zangenkopfebene einer Crimpzange montiert ist, an der der Werkstück-Locator befestigt ist. Eine feinfühlige Bewegung des schlittenförmigen Positionierkörpers entlang des Freiheitsgrads zur Einstellung der gewünschten Relativlage gegenüber dem Zangenkopf kann herbeigeführt werden durch Betätigung eines Spindeltriebs des Werkstück-Locators mittels eines Sechskantwerkzeugs. Die Abtriebsbewegung des Spindeltriebs wird dabei über eine Relativbewegung einer Keilfläche der Spindelmutter des Spindeltriebs gegenüber einer Keilfläche des Positionierkörpers umgewandelt in die Bewegung des Positionierkörpers entlang des Freiheitsgrades.

Die Druckschriften DE 92 13 529 U1, DE 20 2010 008 988 U1, DE 298 12 631 U1, DE20 2006 012 869 U1, US 5,924,322 A, DE 27 18 165 A1, DE 198 32 884 C1, US 4,982,594 A, US 3,710,611 A und US 3,457,764 A offenbaren weitere Ausführungsformen eines Werkstück-Locators, bei denen ein Positionierkörper mit einem Freiheitsgrad ausgestattet ist.

### AUFGABE DER ERFINDUNG

Der Erfindung liegt die Aufgabe zugrunde, einen Werkstück-Locator, und ein Werkzeug mit einem derartigen Werkstück-Locator vorzuschlagen, welcher oder welches multifunktional ist, erweiterte Optionen zur Bereitstellung einer Positionierung des Werkstücks relativ zu dem Werkzeug bereitstellt und/oder hinsichtlich der Bedienung verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt einen Werkstück-Locator vor, der an einem Werkzeug (bei dem es sich um ein Crimpwerkzeug, ein Presswerkzeug und/oder ein Abisolierwerkzeug handeln kann) befestigt werden kann oder Bestandteil desselben ist. Der Werkstück-Locator verfügt dabei über einen Tragkörper, der Bestandteil des Werkzeugs ist oder einen Befestigungsbereich für die Befestigung an dem Werkzeug aufweist. Möglich ist beispielsweise, dass der Tragkörper des Werkstück-Locators an das Werkzeug, insbesondere einen Werkzeugkopf, einen Rahmen des Werkzeugkopfes oder einen bewegten oder einen festen Bearbeitungskörper angeflanscht ist oder von diesem selbst ausgebildet ist.

In dem erfindungsgemäßen Werkstück-Locator ist ein Haltekörper mit einem ersten Freiheitsgrad bewegbar gegenüber dem Tragkörper, wobei der Haltekörper unter Gewährleistung dieses ersten Freiheitsgrades unmittelbar oder mittelbar an dem Tragkörper gelagert ist.

Des Weiteren verfügt der erfindungsgemäße Werkstück-Locator über einen Positionierkörper, der die Aufnahme aufweist, in die das Werkstück eingelegt werden kann, oder einen Anschlag für das Werkstück aufweist. Der Positionierkörper ist dabei mit einem zweiten Freiheitsgrad, der von dem ersten Freiheitsgrad abweicht, bewegbar gegenüber dem Haltekörper, wozu der Positionierkörper unter Gewährleistung dieses zweiten Freiheitsgrades unmittelbar oder mittelbar an dem Haltekörper gelagert ist.

Bei dem ersten und zweiten Freiheitsgrad kann es sich um beliebige Freiheitsgrade handeln, solange diese von einander abweichen. So können der erste Freiheitsgrad und der zweite Freiheitsgrad
- jeweils Dreh- und/oder Klapp-Freiheitsgrade oder um unterschiedliche Dreh- und/oder Klappachsen sein oder
- jeweils translatorische (geradlinige oder kurvenförmige) Freiheitsgrade sein, die zumindest Teilabschnitte mit unterschiedlichen Richtungen aufweisen, oder
einer der Freiheitsgrade ist ein Dreh- oder Klapp-Freiheitsgrad, während der andere Freiheitsgrad ein translatorischer Freiheitsgrad ist.

Während gemäß dem Stand der Technik der Positionierkörper gegenüber dem Tragkörper lediglich einen einzigen Freiheitsgrad aufgewiesen hat, verfügt erfindungsgemäß der Positionierkörper über zwei Freiheitsgrade gegenüber dem Tragkörper. Dies führt zu einem vergrößerten Gestaltungsspielraum hinsichtlich der Beeinflussung der Relativlage des Positionierkörpers gegenüber dem Tragkörper und damit gegenüber den Bearbeitungskörpern. Alternativ oder kumulativ können die unterschiedlichen Freiheitsgrade genutzt werden, um eine verbesserte Handhabung für den Benutzer zu ermöglichen, beispielsweise für das Einlegen des Werkstücks in den Werkstück-Locator und/oder das Entnehmen des Werkstücks aus dem Werkstück-Locator.

Alternativ oder kumulativ können die mehreren Freiheitsgrade dazu genutzt werden, dass der Werkstück-Locator multifunktional ist oder einen erweiterten Funktionsumfang aufweist, indem
- je nach Betriebsstellung des Positionierkörpers entlang mindestens eines der Freiheitsgrade unterschiedliche an dem Werkstück-Locator gehaltene Funktionselemente verwendet werden können und/oder
- die Zahl der an dem Positionierkörper angeordneten Aufnahmen oder Anschläge vergrößert werden kann und je nach Betriebsstellung entlang mindestens eines der Freiheitsgrade unterschiedliche Aufnahmen oder Anschläge in die Betriebsstellung in Ausrichtung zu den Abisoliermessern, Crimpgesenken oder Pressgesenken der Bearbeitungskörper gebracht werden können.

Für einen Vorschlag der Erfindung ist der erste Freiheitsgrad des Haltekörpers ein Dreh-Freiheitsgrad um eine Drehachse, die vertikal zu einer Ebene orientiert ist, in welcher ein Bearbeitungskörper des Werkzeugs über einen Arbeitshub des Werkzeugs, an dem der Werkstück-Locator gehalten ist, bewegt (insbesondere verschwenkt oder translatorisch oder kurvenförmig bewegt) wird. Vorzugsweise handelt es sich bei der Ebene, gegenüber welcher die Drehachse vertikal orientiert ist, um die Werkzeugkopfebene des Werkzeugs. Für diese Ausgestaltung ist der Haltekörper bspw. als eine Art Revolver mit dem ersten Freiheitsgrad gegenüber dem Werkzeug verdrehbar. Die Verdrehung des Haltekörpers hat dann zur Folge, dass je nach Drehstellung des Haltekörpers
- unterschiedliche Teilabschnitte einer Stirnfläche des Positionierkörpers und Aufnahmen oder Anschläge in diesen unterschiedlichen Teilabschnitten oder
- unterschiedliche über den Umfang des Haltekörpers verteilt angeordnete Positionierkörper
in eine Betriebsstellung in Ausrichtung zu den Bearbeitungskörpern gebracht werden können.

Vorzugsweise sind für diese Ausgestaltung an dem Haltekörper mindestens zwei Positionierkörper angeordnet, die über den Umfang des Haltekörpers verteilt angeordnet sind. Je nach Drehstellung des Haltekörpers kann dann selektiv einer der Positionierkörper zur Wirkung gebracht werden. Hierbei können die Positionierkörper dann jeweils mit dem zweiten Freiheitsgrad gegenüber dem Haltekörper bewegbar sein, womit sich zusätzliche Möglichkeiten ergeben. Möglich ist, dass der zweite Freiheitsgrad des Positionierkörpers gegenüber dem Haltekörper ebenfalls ein Dreh-Freiheitsgrad ist, wobei die Drehachse dieses Dreh-Freiheitsgrades vertikal zu der Drehachse des ersten Freiheitsgrades orientiert ist, wenn der erste Freiheitsgrad ein Dreh-Freiheitsgrad ist. In diesem Fall weist der Positionierkörper mindestens zwei Aufnahmen oder Anschläge auf, die über den Umfang des Positionierkörpers verteilt angeordnet sind. Je nach Drehstellung des Positionierkörpers hinsichtlich seines Dreh-Freiheitsgrads können dann jeweils die über den Umfang des Positionierkörpers verteilt angeordneten Aufnahmen oder Anschläge in die Betriebsstellung in Ausrichtung zu den Bearbeitungskörpern gebracht werden.

Findet sowohl für den ersten Freiheitsgrad des Haltekörpers wie beschrieben ein Dreh-Freiheitsgrad sowie für den zweiten Freiheitsgrad des Positionierkörpers ein Dreh-Freiheitsgrad Einsatz, können bei Verwendung mehrerer über den Umfang des Haltekörpers verteilter Positionierkörper an jedem Positionierkörper beispielsweise X Aufnahmen oder Anschläge angeordnet sein, die mit einer Verdrehung um den zweiten Dreh-Freiheitsgrad in die Betriebsstellung gebracht werden können, und um den Umfang des Haltekörpers verteilt Y Positionierkörper angeordnet sein, die jeweils durch Verdrehung um den ersten Dreh-Freiheitsgrad in die Betriebsstellung in Ausrichtung zu den Bearbeitungskörpern gebracht werden können. In diesem Fall kann mittels des Werkstück-Locators die Nutzung von X * Y Aufnahmen oder Anschlägen ermöglicht werden. Es ist aber auch möglich, dass bei Verwendung mehrerer Positionierkörper die Positionierkörper eine unterschiedliche Anzahl von Aufnahmen oder Anschlägen aufweisen.

Gemäß einem weiteren Vorschlag ist der Positionierkörper mit einem Freiheitsgrad gegenüber dem Haltekörper bewegbar, bei dem es sich um einen translatorischen (kurvenförmigen oder geradlinigen) Verschiebe-Freiheitsgrad handelt. Bei diesem Verschiebe-Freiheitsgrad kann es sich um den zweiten Freiheitsgrad handeln. Möglich ist aber auch, dass der zweite Freiheitsgrad beispielsweise wie zuvor erläutert ein Dreh-Freiheitsgrad ist, sodass es sich bei dem genannten Verschiebe-Freiheitsgrad um einen zusätzlichen dritten Freiheitsgrad handelt. Mittels dieses Freiheitsgrades kann vorzugsweise der Abstand des Positionierkörpers und damit der mindestens einen Aufnahme oder des mindestens einen Anschlags gegenüber den Bearbeitungskörpern und der Zangenkopfebene verändert werden. Diese Veränderung des Abstandes kann genutzt werden, um einen vorbestimmten Abstand oder eine Position des Werkstücks gegenüber den Bearbeitungskörpern einzustellen oder eine Anpassung für unterschiedliche Typen von Werkstücken und/oder Bearbeitungskörpern mit unterschiedlichen Gesenken oder Abisoliermessern zu ermöglichen. Ebenfalls möglich ist, dass dieser Verschiebe-Freiheitsgrad genutzt wird für eine Verbesserung des Einlegens des Werkstücks in eine Aufnahme und/oder das Entnehmen des Werkstücks aus der Aufnahme.

Der Verschiebe-Freiheitsgrad kann durch eine beliebige unmittelbare oder mittelbare Lagerung zwischen dem Positionierkörper und dem Haltekörper oder eine geeignete Führungseinrichtung bereitgestellt werden. Für einen Vorschlag wird der translatorische Verschiebe-Freiheitsgrad, also der zweite oder dritte Freiheitsgrad, mittels eines Schlittens bereitgestellt. Hierbei ist auch möglich, dass der Verschiebe-Freiheitsgrad durch eine Arretiervorrichtung arretiert werden kann, womit eine Sicherung einer durch die Verschiebung herbeigeführten Betriebsstellung erfolgen kann. Bei einer Arretiervorrichtung handelt es sich um eine beliebige Einrichtung, mittels welcher der Verschiebe-Freiheitsgrad arretiert werden kann. Die Arretiereinrichtung kann beispielsweise als Rast- oder Verriegelungseinrichtung ausgebildet sein, mit einem Sicherungsstift ausgebildet sein oder eine Schraub- oder Klemmeinrichtung sein. Im einfachsten Fall kann der Verschiebe-Freiheitsgrad durch eine geeignete Führungsnut des Haltekörpers oder Positionierkörpers ausgebildet sein, in der mindestens ein Nutenstein des anderen Körpers von dem Haltekörper und dem Positionierkörper gleitend geführt ist.

Der translatorische Verschiebe-Freiheitsgrad des Schlittens kann eine beliebige Länge, also einen beliebigen Schlittenweg bereitstellen, der die unterschiedlichen erforderlichen Betriebsstellungen des Schlittens gewährleistet. Für einen besonderen Vorschlag ist der Schlittenweg so bemessen, dass durch die Bewegung des Schlittens ein Einschieben des Positionierkörpers zwischen die geöffneten Bearbeitungskörper des Werkzeugs möglich ist. Möglich ist sogar auch, dass der Schlittenweg so bemessen ist, dass der Positionierkörper durch einen Zwischenraum zwischen den Bearbeitungskörpern so hindurchgeschoben werden kann, dass eine Stirnfläche des Positionierkörpers (und damit eine Aufnahme für ein Werkstück in dieser Stirnfläche) auf einer Seite des Werkzeugs, die der Seite des Werkzeugs, auf der der Haltekörper angeordnet ist, gegenüberliegt, zumindest geringfügig aus den geöffneten Bearbeitungskörpern heraussteht. Während gemäß dem Stand der Technik das Einlegen des Werkstücks auf der Seite erfolgt, auf der der Haltekörper angeordnet ist, kann für die zuvor beschriebene Bemessung des Schlittenweges auch ermöglicht werden, dass ein Einlegen des Werkstücks von der anderen Seite erfolgt, womit das Einlegen (insbesondere für sehr kleine Werkstücke) vereinfacht werden kann.

Für einen weiteren Vorschlag ist der Schlitten in einer T-Nut des Haltekörpers [oder des Positionierkörpers] geführt. In diesem Fall kann der Schlitten mindestens einen T-Nutenstein aufweisen. Der T-Nutenstein kann in einer Montagestellung von oben in eine Öffnung der T-Nut einsetzbar sein, während der T-Nutenstein abseits dieser Öffnung mit dem translatorischen Verschiebe-Freiheitsgrad, also dem zweiten oder dritten Freiheitsgrad, in der T-Nut geführt sein kann. Diese Ausgestaltung ermöglicht eine einfache Montage und gegebenenfalls auch Demontage des Schlittens von dem Haltekörper oder Positionierkörper, womit auch je nach Anwendungszweck unterschiedliche Schlitten mit dem Haltekörper oder Positionierkörper verwendbar sind.

Für eine Ausführungsform bildet der Schlitten einen Anschlag für ein Werkstück aus. Im einfachsten Fall ist der Schlitten dann in erster Näherung L-förmig ausgebildet, wobei ein Schenkel des L in Richtung des translatorischen Freiheitsgrades orientiert ist und den Verschiebe- Freiheitsgrad bereitstellt und für eine Ausführungsform die T-Nutensteine tragen kann, während der andere Schenkel des L dann einen Anschlag für das Werkstück bildet.

Vorgeschlagen wird auch eine Ausführungsform, bei der der Positionierkörper mit einem Klapp-Freiheitsgrad gegenüber dem Haltekörper gelagert ist, mit welchem der Positionierkörper relativ zu dem Haltekörper auf- und zugeklappt (also an die Werkzeugkopfebene herangeklappt und von dieser weggeklappt) werden kann. Bei diesem Klapp-Freiheitsgrad kann es sich um den zweiten Freiheitsgrad handeln. Möglich ist aber auch, dass dieser Klapp-Freiheitsgrad als zusätzlicher, vierter Freiheitsgrad für den Positionierkörper vorgesehen ist. So ist beispielsweise möglich, dass der Haltekörper einen ersten Dreh-Freiheitsgrad aufweist, um den Umfang des Haltekörpers mehrere Positionierkörper mit einem zweiten Dreh-Freiheitsgrad angeordnet sind und mindestens einer der Positionierkörper dann über einen vierten Klapp-Freiheitsgrad gegenüber dem Haltekörper bewegbar ist. Optional kann dann zusätzlich auch der Verschiebe-Freiheitsgrad vorhanden sein.

Für eine besondere Ausführungsform kann der Klapp-Freiheitsgrad mittels eines in der T-Nut angeordneten T-Nutensteins die Klappachse für das Auf- und Zuklappen bereitstellen. Die in den Hinterschneidungen der T-Nut geführten Querschenkel des T-Nutensteins können in diesem Fall die die Klappachse vorgebenden Drehzapfen bilden.

Für die zuvor beschriebenen Ausführungsformen ist möglich, dass mindestens einer der genannten Freiheitsgrade (mindestens einer der Dreh-Freiheitsgrade und/oder der Verschiebe-Freiheitsgrad und/oder der Klapp-Freiheitsgrad) über eine Arretiereinrichtung arretiert werden kann. Für die Ausgestaltung der Arretiereinrichtung gibt es im Rahmen der Erfindung vielfältige Möglichkeiten.

Für einen Vorschlag kann der erste Freiheitsgrad, der in diesem Fall als Dreh-Freiheitsgrad ausgebildet ist, dadurch arretiert und freigegeben werden, dass der Haltekörper mit und gegen die Beaufschlagung einer Arretierfeder in Richtung der Drehachse des ersten Dreh-Freiheitsgrads verschieblich ist zwischen einer arretierten Stellung und einer nicht arretierte Stellung. Hierbei ist in der arretierten Stellung ein Arretiervorsprung des Tragkörpers [oder des Haltekörpers] in einem Arretierrücksprung des Haltekörpers [oder des Tragkörpers] angeordnet, wodurch der erste Dreh-Freiheitsgrad arretiert ist. Hingegen ist in der nicht arretierten Stellung der Arretiervorsprung des Tragkörpers [oder des Haltekörpers] außerhalb des Arretierrücksprungs des Haltekörpers [oder des Tragkörpers] angeordnet, womit der erste Dreh-Freiheitsgrad freigegeben ist. Vorzugsweise verfügen in diesem Fall der Tragkörper und/oder der Haltekörper über mehrere Arretiervorsprünge oder Arretierrücksprünge, die jeweils unterschiedliche Drehstellungen als Betriebsstellung sichern können.

Möglich ist, dass der zweite Freiheitsgrad, bei dem es sich in diesem Fall um einen Dreh-Freiheitsgrad handelt, dadurch arretiert und freigegeben werden kann, dass der Positionierkörper mit und gegen die Beaufschlagung einer Arretierfeder in Richtung der Drehachse des zweiten Dreh-Freiheitsgrads verschieblich ist gegenüber dem Haltekörper zwischen einer arretierten Stellung und einer nicht arretierten Stellung. In der arretierten Stellung ist ein Arretiervorsprung des Positionierkörpers [oder des Haltekörpers] in einem Arretierrücksprung des Haltekörpers [oder des Positionierkörpers] angeordnet, womit der zweite Dreh-Freiheitsgrad blockiert ist. Hingegen ist in der nicht arretierten Stellung der Arretiervorsprung des Positionierkörpers [oder des Haltekörpers] außerhalb des Arretierrücksprungs des Haltekörpers [oder des Positionierkörpers] angeordnet, womit der zweite Dreh-Freiheitsgrad freigegeben ist. Auch in diesem Fall können mehrere Arretiervorsprünge und/oder Arretierrücksprünge an dem Positionierkörper und/oder dem Haltekörper vorgesehen sein, um unterschiedliche Betriebsstellungen des Positionierkörpers gegenüber dem Haltekörper sichern zu können.

Wie erläutert ist möglich, dass um den Umfang des Positionierkörpers verteilt mehre Aufnahmen oder Anschläge angeordnet sein können, die in unterschiedlichen Betriebsstellungen des Positionierkörpers in Ausrichtung zu den Bearbeitungskörpern gebracht werden können. Hierbei können die Aufnahmen jeweils im Bereich einer der mehreren Stirnflächen des Positionierkörpers angeordnet sein. Möglich ist für diese Ausführungsform auch, dass in eine von den Paaren der Bearbeitungskörper weggedrehte Aufnahme ein Werkstück eingelegt wird. Die Aufnahme wird dann vor der Durchführung des Arbeitshubs des Werkzeugs in die Betriebsstellung gedreht, in der die Aufnahme zu den Bearbeitungskörpern ausgerichtet ist und sich unmittelbar benachbart oder in der Werkzeugkopfebene befindet. Auf diese Weise kann das Einlegen des Werkstücks in die Aufnahme vereinfacht werden.

Für einen weiteren Vorschlag sind an einer Stirnfläche des Positionierkörpers mehrere Aufnahmen oder Anschläge nebeneinander angeordnet. Dies ist insbesondere dann von Vorteil, wenn die Bearbeitungskörper ebenfalls nebeneinander mehrere Arbeitsstationen, also mehrere Abisoliermesser, mehrere Crimpgesenke oder mehrere Pressgesenke aufweisen. Die mehreren Aufnahmen oder Anschläge des Positionierkörpers im Bereich einer Stirnfläche können dann jeweils für die Positionierung und Ausrichtung des Werkstücks zu den unterschiedlichen Arbeitsstationen verwendet werden.

Eine weitere Lösung der der Erfindung zugrunde liegenden Aufgabe stellt ein Crimpwerkzeug, Presswerkzeug und/oder Abisolierwerkzeug dar, welches mit einem Werkstück-Locator nach einem der vorhergehenden Ansprüche ausgestattet ist. Hierbei kann der Werkstück-Locator als Zusatzbaugruppe an das Werkzeug angebaut oder mit dem Tragkörper an dieses angeflanscht sein. Möglich ist aber auch, dass der Werkstück-Locator oder zumindest der Tragkörper des Werkstück-Locators integraler Bestandteil des Crimpwerkzeugs, Presswerkzeugs und/oder Abisolierwerkzeugs ist. Wie eingangs erwähnt kann das Crimpwerkzeug, Presswerkzeug oder Abisolierwerkzeug ein Handwerkzeug sein, welches manuell betrieben wird oder mittels eines elektrischen, pneumatischen oder hydraulischen Antriebs betrieben wird, oder eine Werkzeugmaschine sein.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Darstellung einen Zangenkopf einer Crimpzange mit daran befestigtem Werkstück-Locator.
- **Fig. 2**: zeigt in einer räumlichen Darstellung den Werkstück-Locator gemäß Fig. 1.
- **Fig. 3**: zeigt in einer räumlichen Explosionsdarstellung den Werkstück-Locator gemäß Fig. 1 und 2.
- **Fig. 4 bis 6**: zeigen in räumlichen Ansichten einen Zangenkopf eines Crimpwerkzeugs mit daran befestigtem Werkstück-Locator gemäß Fig. 1 bis 3, wobei sich der Werkstück-Locator in unterschiedlichen Betriebsstellungen hinsichtlich seiner Freiheitsgrade befindet.
- **Fig. 7**: zeigt in einer räumlichen Ansicht eine weitere Ausführungsform eines Werkstück-Locator, bei welchem eine Bewegung eines einen Positionierkörper tragenden Schlittens entlang einer Messskala erfolgt.
- **Fig. 8**: zeigt in einer schematisierten geschnittenen Darstellung einen Werkstück-Locator in einer arretierten Stellung einer Arretiereinrichtung, die einen Dreh-Freiheitsgrad eines Haltekörpers gegenüber eines Tragkörpers arretiert.
- **Fig. 9 und 10**: zeigen in räumlichen Ansichten Ausführungsformen eines Werkstück-Locators mit Positionierkörpern mit unterschiedlichen Außengeometrien und Stirnflächen und unterschiedlichen Integrationen der Aufnahmen in die Positionierkörper.
- **Fig. 11 und 12**: zeigen in geschnittenen schematischen Darstellungen eine Montage eines einen Positionierkörper tragenden Schlittens mit einer T-Nut eines Haltekörpers in unterschiedlichen Montageschritten.
- **Fig. 13 und 14**: zeigen in geschnittenen schematischen Darstellungen den Werkstück-Locator gemäß Fig. 11 und 12 nach der Montage in unterschiedlichen Betriebsstellungen des Schlittens mit dem Positionierkörper gegenüber dem Haltekörper entlang eines translatorischen Freiheitsgrades des Schlittens.
- **Fig. 15**: zeigt in einer räumlichen Darstellung einen Zangenkopf mit einem daran befestigten Werkstück-Locator, wobei eine Positionierkörper mittels eines Schlittens durch geöffnete Bearbeitungskörpers des Zangenkopfes von einer Seite des Zangenkopfes zu der anderen Seite des Zangenkopfes hindurchbewegt ist.
- **Fig. 16 und 17**: zeigen in räumlichen Darstellungen eine Ausführungsform eines Werkstück-Locators, bei welcher ein Positionierkörper von einem Schlitten ausgebildet ist, der einen Anschlag für ein Werkstück bereitstellt.

### FIGURENBESCHREIBUNG

In der folgenden Figurenbeschreibung wird teilweise für Bauelemente oder Merkmale, die sich hinsichtlich der Gestaltung und/oder Funktion entsprechen oder ähneln, dieselbe Bezugszahl verwendet, wobei dann diese Bauelemente oder Merkmale durch einen zusätzlichen Buchstaben a, b oder eine zusätzliche Ziffer "-1", "-2" voneinander unterschieden sein können. Auf diese Bauelemente oder Komponenten kann dann auch mit der Bezugszahl ohne Verwendung des zusätzlichen Buchstabens oder der zusätzlichen Ziffer Bezug genommen sein, womit dann eines oder eine beliebige Anzahl dieser Bauelemente oder Merkmale gemeint sein können.

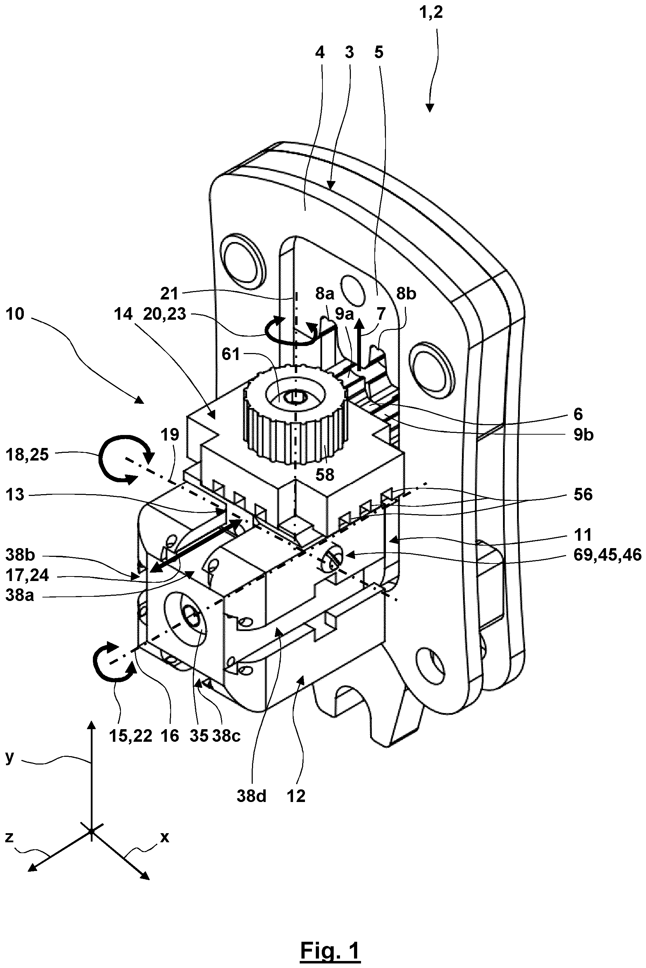

Fig. 1 zeigt ein Teil eines Werkzeugs 1, bei dem es sich um eine manuell betätigte Crimpzange 2 handelt, im Bereich einen Crimpzangen- oder Werkzeugkopfes 3. Der Werkzeugkopf 3 verfügt über einen Rahmen 4, an dem ein Bearbeitungskörper 5 fixiert ist, während ein weiterer Bearbeitungskörper 6 über einen Arbeitshub in eine Bearbeitungsrichtung 7 bewegbar ist. Die Bearbeitungskörper 5, 6 verfügen über in eine Richtung quer zur Bearbeitungsrichtung 7 nebeneinander angeordnete Paare von Crimpgesenkhälften 8a, 9a; 8b, 9b, wobei jeweils eines dieser Paare von Crimpgesenkhälften 8a, 9a; 8b, 9b ein Crimpgesenk bildet, mit dem ein Stecker vercrimpt werden kann.

Der Werkzeugkopf 3 gibt eine Werkzeugkopfebene vor, die parallel zu der durch die Achsen y, y in Fig. 1 aufgespannten Ebene verläuft. Die Bearbeitungsrichtung 7 erstreckt sich parallel zu dieser Werkzeugkopfebene und in Richtung der Y-Achse. Hingegen sind die Paare der Crimpgesenkhälften 8, 9 in Richtung der x-Achse voneinander beanstandet angeordnet.

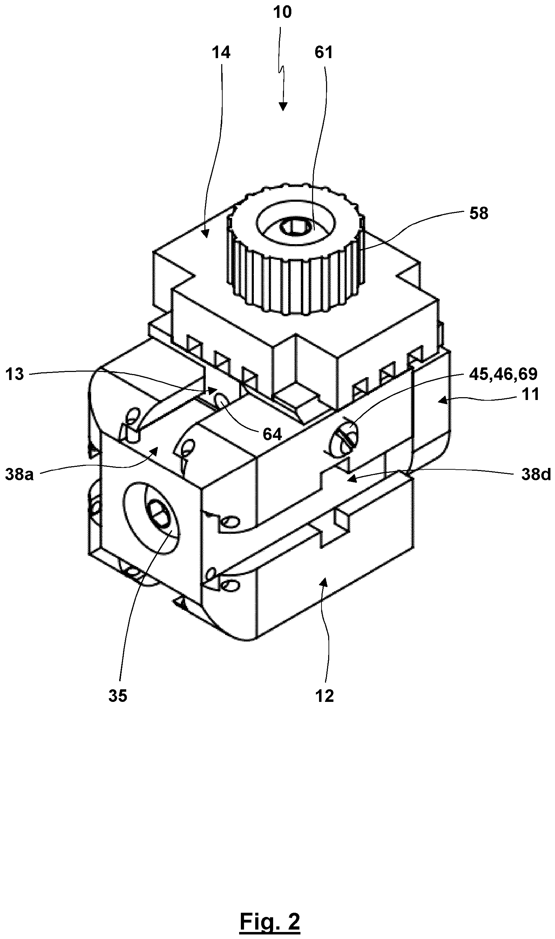

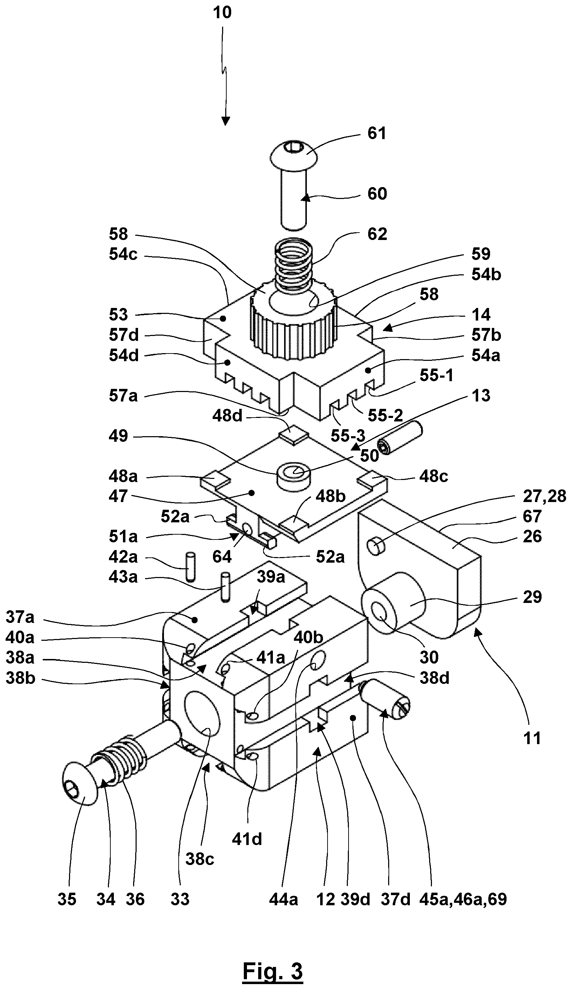

An dem Werkzeugkopf 3 ist ein Werkstück-Locator 10 befestigt, der in Fig. 2 ohne Werkzeugkopf 3 und in Fig. 3 in einer Explosionsdarstellung dargestellt ist.

Der Werkstück-Locator 10 verfügt gemäß Fig. 3 über einen Tragkörper 11, einen Haltekörper 12, einen Schlitten 13 und einen Positionierkörper 14. Durch geeignete Lagerungen und/oder Führungen sind die folgenden Freiheitsgrade der Komponenten des Werkstück-Locator 10 bereitgestellt:
- Der Haltekörper 12 kann gegenüber dem Tragkörper 11 mit einem Dreh-Freiheitsgrad 15 um eine Drehachse 16 verdreht werden. Die Drehachse 16 ist dabei vertikal zur Werkzeugkopfebene 3 orientiert.
- Der Schlitten 13 kann gegenüber dem Haltekörper 12 entlang eines translatorischen Verschiebe-Freiheitsgrad 17 bewegt werden. Der Verschiebe-Freiheitsgrad 17 ist dabei parallel zur Drehachse 16 orientiert.
- Der Positionierkörper 14 ist gegenüber dem Schlitten 13 mit einem Klapp-Freiheitsgrad 18 um eine Klappachse 19 bewegbar. Die Klappachse 19 ist parallel zur Werkzeugkopfebene und (in der in Fig. 1 dargestellten Betriebsstellung) vertikal zur Bearbeitungsrichtung 7 orientiert.
- Der Positionierkörper 14 ist mit einem Dreh-Freiheitsgrad 20 um eine Drehachse 21 gegenüber dem Schlitten 13 verdrehbar. Die Drehachse 21 ist in der in Fig. 1 dargestellten Betriebsstellung parallel zu der Werkzeugkopfebene und (in der in Fig. 1 dargestellten Betriebsstellung) parallel zu der Bearbeitungsrichtung 7 orientiert.

Für das dargestellte Ausführungsbeispiel bildet der Dreh-Freiheitsgrad 15 einen ersten Freiheitsgrad 22, der Dreh-Freiheitsgrad 20 einen zweiten Freiheitsgrad 23, der Verschiebe-Freiheitsgrad 17 einen dritten Freiheitsgrad 24 und der Klapp-Freiheitsgrad 18 einen vierten Freiheitsgrad 25, entlang dessen der Positionierkörper 14 gegenüber dem Haltekörper 12 bewegbar ist. Möglich sind aber auch Ausführungsformen, bei denen ein beliebiger der genannten Freiheitsgrade oder zwei beliebige der genannten Freiheitsgrade entfallen sind. Beispielweise kann der Werkstück-Locator 10 ohne den Schlitten 13 und ohne Verschiebe-Freiheitsgrad 17 und/oder ohne den Klapp-Freiheitsgrad 18 ausgebildet sein, sodass lediglich entlang des ersten Freiheitsgrades 22 die Verdrehung des Haltekörpers 12 gegenüber dem Tragkörper 11 sowie entlang des zweiten Freiheitsgrades 23 die Verdrehung des Positionierkörpers 14 gegenüber dem Haltekörper 12 möglich ist. Insbesondere der dritte und/oder vierte Freiheitsgrad 24, 24 sind somit lediglich optional.

Wie in Fig 3 zu erkennen ist, weist der Tragkörper 11 einen plattenförmigen Grundkörper 26 auf, dessen Rückseite an dem zugeordneten Bauelement des Werkzeugkopfes 3 (insbesondere dem Rahmen 4 oder einem Bearbeitungskörper 6) anliegt. Über eine nicht dargestellte Schraub- oder Flanschverbindung ist der Grundkörper 26 in einem Befestigungsbereich 67 an diesem Bauelement des Werkzeugkopfes 3 befestigt.

Auf der dem Haltekörpers 12 zugewandten Seite verfügt der Tragkörper 11 über einen Arretiervorsprung 27, der hier als Arretierzapfen 28 ausgebildet ist. Des Weiteren verfügt der Tragkörper 11 auf dieser Seite über eine Lagerhülse 29, die eine zylindrische äußere Lagerfläche und eine innere Gewindebohrung 30 aufweist. Für das dargestellte Ausführungsbeispiel sind der Arretiervorsprung 27 und die Lagerhülse 29 einstückig mit dem Grundkörper 26 ausgebildet und diese erstrecken sich parallel zu der Drehachse 16.

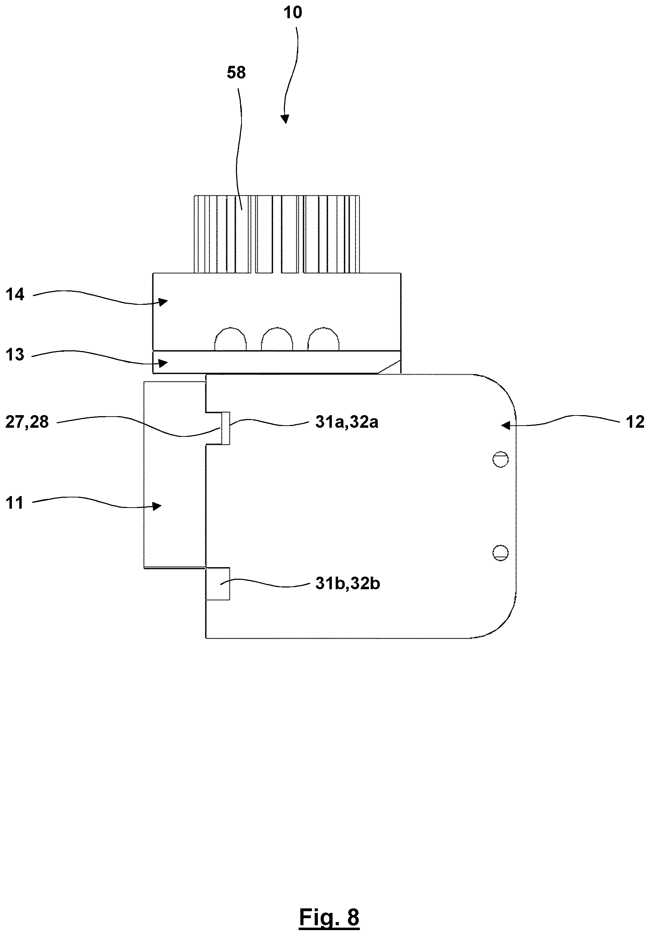

Der Haltekörper 12 ist in erster Näherung quader- oder würfelförmig ausgebildet. Auf der in Fig. 3 nicht sichtbaren hinteren Stirnfläche, die dem Tragkörper 11 zugewandt ist, verfügt der Haltekörper 12 über Arretierrücksprünge 31, die als Arretierbohrungen 32 ausgebildet sind (vgl. Fig. 8). Die Arretierbohrungen 32 verfügen über eine Tiefe und einen Durchmesser derart, dass in diesen der Arretierzapfen 28 zur Arretierung des Dreh-Freiheitsgrads 15 Aufnahme finden kann. Hierbei sind vier Arretierbohrungen 32 derart um die Drehachse 16 verteilt angeordnet, dass der Arretierzapfen 28 jeweils nach einer Verdrehung des Haltekörpers 12 um 90° um die Drehachse 16 in eine der Arretierbohrungen 32 eintreten kann.

Der Haltekörper 12 verfügt über eine abgestufte Durchgangsbohrung 33. Auf der dem Tragkörper 11 zugewandten Seite weist die Durchgangsbohrung eine erweiterte innere zylindrische Lagerfläche auf, mit welcher der Haltekörper 12 drehbar auf der zylindrischen Lagerfläche der Lagerhülse 29 des Tragkörpers 11 gelagert ist.

Durch die Durchgangsbohrung 33 hindurch ist ein Lager- und/oder Befestigungsbolzen 34 mit der Gewindebohrung 30 der Lagerhülse 29 des Tragkörpers 11 verschraubt. Der Haltekörper 12 ist mit einem Spiel zwischen einem Kopf 35 des Lager- und/oder Befestigungsbolzens 34 und dem Grundkörper 26 des Tragkörpers 11 gefangen. Eine Arretierfeder 36 ist mit einem Federfußpunkt an dem Kopf 35 des Lager- und/oder Befestigungsbolzens 34 abgestützt, während der andere Federfußpunkt der Arretierfeder 36 an der dem Tragkörper 11 abgewandten Stirnfläche des Haltekörpers 12 oder einer Stufe der Durchgangsbohrung 33 abgestützt ist. Die Arretierfeder 36 ist vorgespannt, sodass diese den Haltekörper 12 mit der Vorspannkraft in Richtung des Tragkörpers 11 beaufschlagt und mit dieser Vorspannkraft der Arretierzapfen 28 in die Arretierbohrung 32 hineingedrückt ist. Werden manuelle Zugkräfte auf den Haltekörper 12 aufgebracht, mit welchen unter Erhöhung der Beaufschlagung der Arretierfeder 36 der Haltekörper 12 von dem Tragkörper 11 und damit die Arretierbohrung 32 von dem Arretierzapfen 28 weggezogen werden, kann die Arretierung gelöst werden und manuell eine Verdrehung des Haltekörpers 12 um die Drehachse 16 erfolgen.

Der quaderförmige Haltekörper 12 verfügt über vier Seitenflächen 37a, 37b, 37c, 37d. In die Seitenflächen 37 sind jeweils T-Nuten 38 eingebracht, die durchgehend und somit endseitig offen sind. Die T-Nuten 38 erstrecken sich parallel zu der Drehachse 16 in den Seitenflächen 37.

In dem dem Tragkörper 11 abgewandten Endbereich können die Hinterschneidungen der T-Nuten geschlossen sein, womit Anschläge bereitgestellt sind, die eine Bewegung eines T-Nutensteins 51 in der T-Nut 38 begrenzen. Für das dargestellte Ausführungsbeispiel verfügen die Hinterschneidungen in dem außenliegenden Endbereich über Bohrungen 40, 41, in denen zur Bereitstellung dieser Anschläge Stifte 42, 43 aufgenommen sind.

Ungefähr mittig verfügen die T-Nuten 38 über eine Öffnung 39, im Bereich welcher die ansonsten von der T-Nut 38 gebildete Hinterschneidung beseitigt ist. Im Bereich der Öffnungen 39 mündet in die T-Nut 38 eine von einer benachbarten Seitenfläche 37 ausgehende Gewindebohrung 44, in die ein Arretierelement 45, hier eine Madenschraube 46, einschraubbar ist, welches/welche eine Arretiereinrichtung 69 bildet, mit der der Verschiebe-Freiheitsgrad 17 arretiert werden kann.

Für das dargestellte Ausführungsbeispiel verfügt der Schlitten 13 über einen plattenförmigen Grundkörper 47, dessen Geometrie in der Haupterstreckungsebene quadratisch oder rechteckig ist und der Geometrie der zugeordneten Seitenfläche 37 entspricht. Auf der dem Haltekörper 12 abgewandten Seite verfügt der Grundkörper 47 im Bereich der Ecken über Arretiervorsprünge 48a, 48b, 48c, 48d. Des Weiteren verfügt der Grundkörper 47 auf der dem Haltekörper 12 abgewandten Seite über eine mittige Lagerhülse 49, deren äußere Mantelfläche eine zylindrische Lagerfläche bildet und welche eine innere Gewindebohrung 50 aufweist.

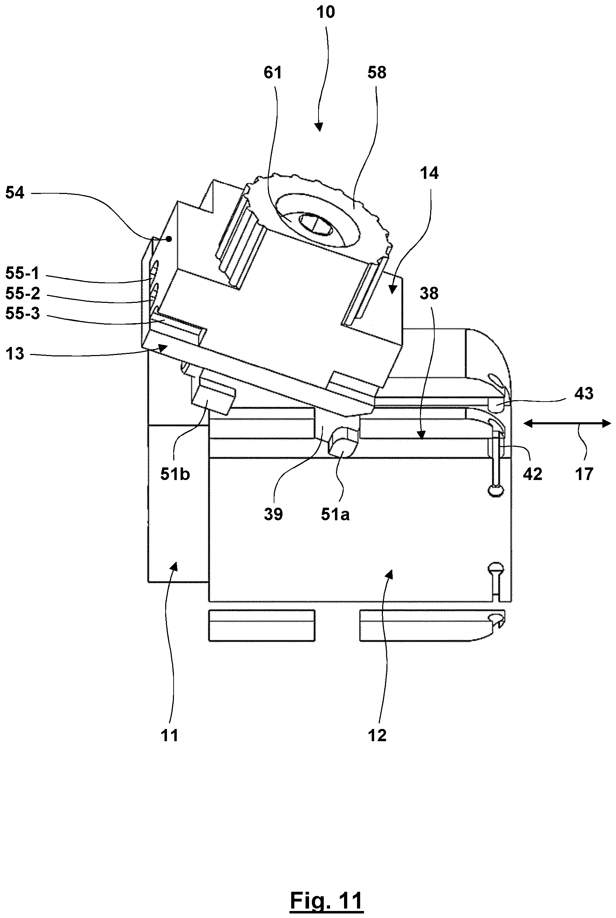

Auf der dem Haltekörper 12 zugewandten Seite verfügt der Schlitten 13 über zwei T-Nutensteine 51a, 51b (s. a. Fig. 11 bis 14). Hierbei ist der in Fig. 3 sichtbare T-Nutenstein 51a in dem dem Tragkörper 11 abgewandten Endbereich des Grundkörpers 47 angeordnet, während der andere T-Nutenstein 51b in einem Abstand von dem T-Nutenstein 51a angeordnet ist, der mit dem Abstand der Öffnung 39 von den von den Stiften 42, 43 gebildeten Anschlägen korreliert.

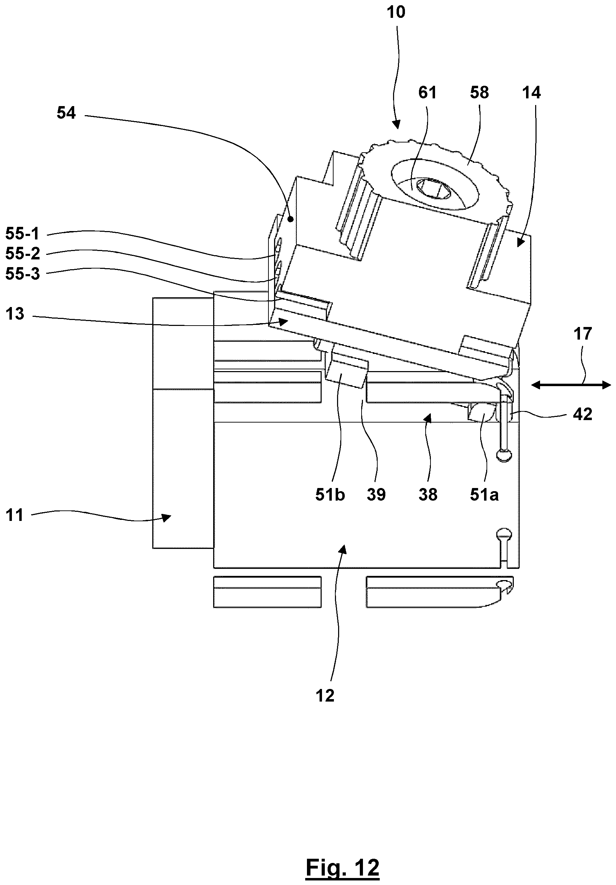

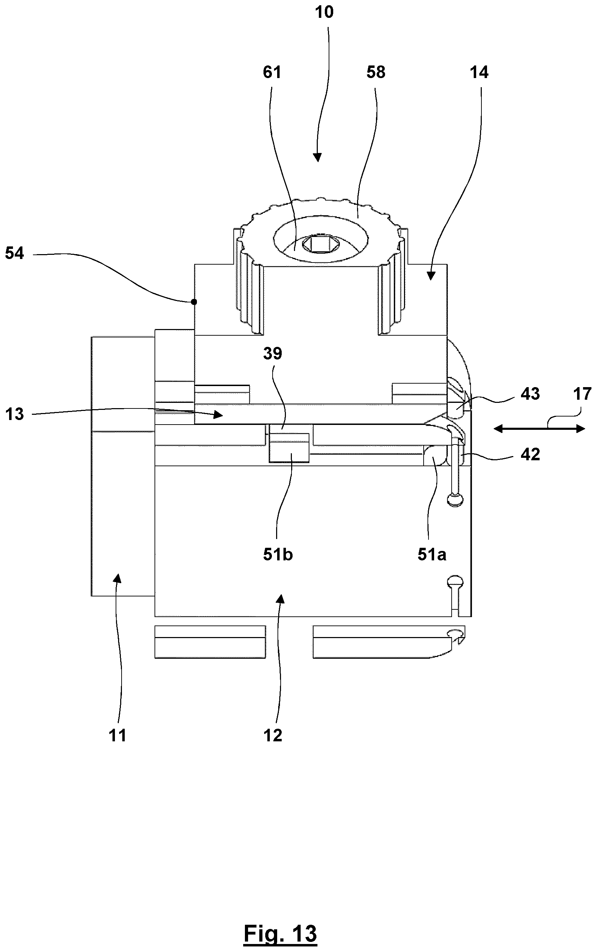

In einer gegenüber der Seitenfläche 37a unter einem spitzen Winkel geneigten Orientierung des Grundkörpers 47 (vgl. Fig. 11) kann der T-Nutenseiten 41a durch die Öffnung 39a in die T-Nut 38a eingeführt werden und in dieser in Richtung der von den Stiften 42, 43 gebildeten Anschläge bewegt werden (vgl. Fig. 12). In der durch die Anschläge vorgegebenen Endstellung kann dann mit einer Verringerung des spitzen Winkels der Grundkörper 47 an die Seitenfläche 37a herangeklappt werden, womit der T-Nutenstein 51b ebenfalls durch die Öffnung 39a in die T-Nut 38a eintritt (vgl. Fig. 13).

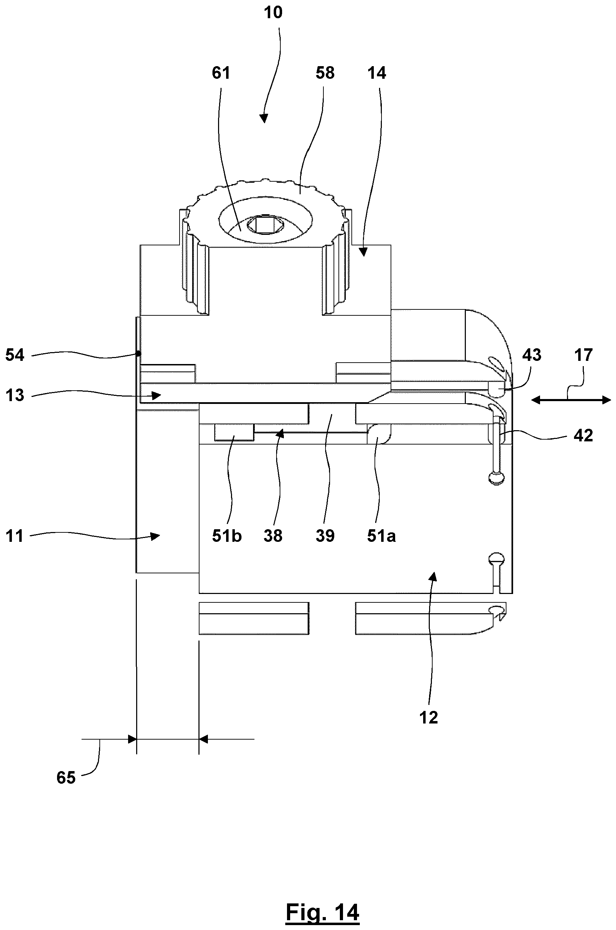

Wird hieran anschließend der Schlitten 13 von den Anschlägen weg in Richtung des Tragkörpers 11 verschoben (vgl. Fig. 14), sind beide T-Nutensteine 51a, 51b in der T-Nut 38a gefangen, aber in Richtung des Verschiebe-Freiheitsgrads 17 verschiebbar. Über einen Schlittenweg sind die T-Nutensteine 51a, 51b in der T-Nut 38a abseits der Öffnung 39a angeordnet, sodass diese nicht aus der T-Nut 38a austreten können.

Befindet sich hingegen der T-Nutenstein 51b unterhalb der Öffnung 39a (was vorzugsweise der Fall ist, wenn der andere T-Nutenstein 51a an den von den Stiften 42, 43 bereitgestellten Anschlägen anliegt), kann eine Verschwenkung des Schlittens 13 um die von den Querschenkeln 52 des T-Nutensteins 51a gebildeten Schwenkzapfen in der T-Nut 38a erfolgen, womit der Klapp-Freiheitsgrad 18 um die Klappachse 19 bereitgestellt ist. Der Klapp-Freiheitsgrad 18 ist somit nur in einer vorgegebenen Stellung, insbesondere der durch die Anschläge vorgegebenen Endlage vorhanden, wobei auch je nach Bemessung eines Übermaßes der Erstreckung der Öffnung 39a in Richtung des Verschiebe-Freiheitsgrads 17 der Klapp-Freiheitsgrad 18 in einem Teilabschnitt des Verschiebe-Freiheitsgrads 17 bereitgestellt sein kann.

Der Positionierkörper 14 verfügt über einen Grundkörper 53, der eine im Wesentlichen rechteckige Grundfläche aufweist und quaderförmig ausgebildet ist. Der Grundkörper 53 verfügt über vier paarweise rechtwinklig zueinander orientierte Stirnflächen 54a, 54b, 54c, 54d. In die Stirnflächen 54 sind jeweils nebeneinander Sätze mit mehreren Aufnahmehälften 55-1, 55-2, 55-3 eingebracht. Die Aufnahmehälften 55 werden jeweils zu im Querschnitt randgeschlossenen Aufnahmen 56 durch den Grundkörper 47 des Schlittens 13 geschlossen, wenn der Positionierkörper 14 in der arretierten Betriebsstellung an dem Schlitten 13 anliegt.

In den Ecken weist der Grundkörper 53 Arretierrücksprünge 57a, 57b, 57c, 57d auf.

Mittig erstreckt sich von dem Grundkörper 53 auf der dem Schlitten 13 abgewandten Seite ein Rändelrad 58. Eine Durchgangsbohrung 59 erstreckt sich zentral durch das Rändelrad 58 und den Grundkörper 53. Durch die Durchgangsbohrung 59 erstreckt sich ein Lager- und/oder Befestigungsbolzen 60, der in dem einem Kopf 61 gegenüberliegenden Endbereich mit der Gewindebohrung 50 des Schlittens 13 verschraubt ist. Mit einem axialen Spiel ist der Positionierkörper 14 zwischen dem Kopf61 und dem Grundkörper 47 des Schlittens 13 gefangen. Eine vorgespannte Arretierfeder 62 ist mit einem Federfußpunkt an dem Kopf 61 abgestützt, während sich der andere Federfußpunkt an einer Stufe der Durchgangsbohrung 59 abstützt. Die Arretierfeder 62 drückt den Positionierkörper 14 in Richtung des Schlittens 13. In einer arretierten Betriebsstellung sind die Arretiervorsprünge 48 des Schlittens 13 in den Arretierrücksprüngen 57 des Positionierkörpers 14 aufgenommen, womit eine Arretierung des Dreh-Freiheitsgrads 20 des Positionierkörpers 14 gegenüber dem Schlitten 13 um die Drehachse 21 erfolgt. Werden manuelle Zugkräfte von dem Benutzer derart auf das Rändelrad 58 aufgebracht, dass der Positionierkörper 14 gegen die Beaufschlagung der Arretierfeder 62 von dem Schlitten 13 weggezogen wird, treten die Arretiervorsprünge 48 aus den Arretierrücksprüngen 57 aus, womit über das Rändelrad 58 die Verdrehung des Positionierkörpers 14 um die Drehachse 21 gegenüber dem Schlitten 13 erfolgen kann, bis die Arretierrücksprünge 57 in zuvor benachbarte Arretiervorsprünge 48 eintreten können.

Zur Vereinfachung der Darstellung und Förderung der Übersichtlichkeit ist in den Figuren lediglich eine T-Nut 38a mit einem Schlitten 13 und einem Positionierkörper 14 ausgestattet. Auch eine, zwei oder alle drei weitere(n) T-Nuten 38 können mit einem Schlitten 13 und einem Positionierkörper 14 ausgestattet sein.

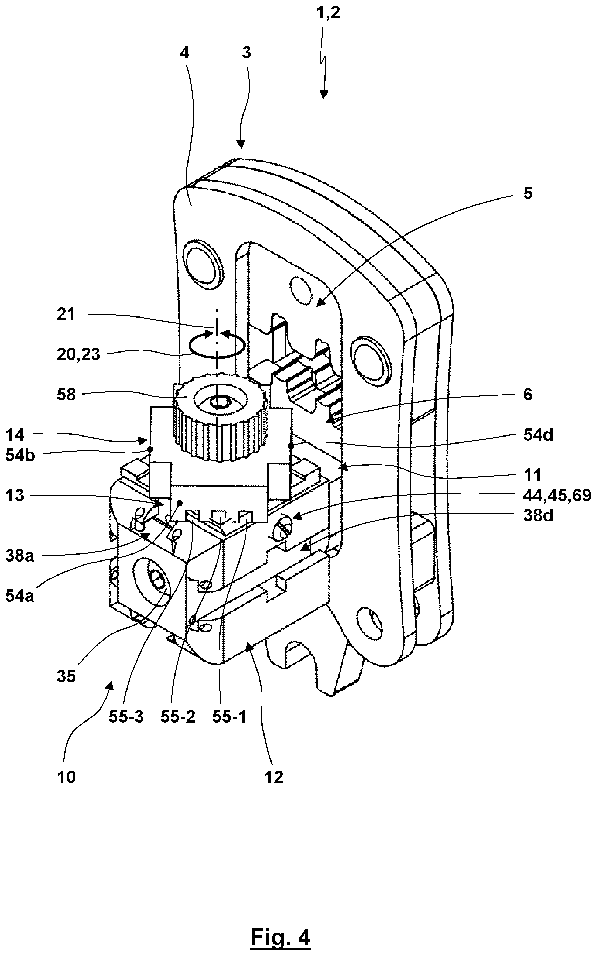

Fig. 4 zeigt den Werkzeugkopf 3 mit dem Werkstück-Locator 10, wobei sich der Haltekörper 12 in einer arretierten Betriebsstellung gegenüber dem Tragkörper 11 befindet. Hingegen ist der Positionierkörper 14, der sich in der oben angeordneten T-Nut 38a befindet, nicht in einer arretierten Betriebsstellung gegenüber dem Schlitten 13. Somit ist auch keine der Aufnahmen 56 des Positionierkörpers zu den Bearbeitungskörpern 5, 6, hier zu den Paaren der Gesenkhälften 8, 9, ausgerichtet. Vielmehr müsste hierzu eine Verdrehung des Positionierkörpers 14 entsprechend dem Dreh-Freiheitsgrad 20 um die Drehachse 21 erfolgen, bis eine Arretierung des Positionierkörpers 14 gegenüber dem Schlitten 13 erfolgt, was infolge der Wirkung der Arretierfeder 62 auch von dem Benutzer anhand eines Einschnappens der Arretiervorsprünge 48 in die Arretierrücksprünge 57 sensiert werden kann. In jeweils um 90° um die Drehachse 21 verdrehten Betriebsstellungen können dann jeweils die unterschiedlichen Aufnahmen 56 der Stirnflächen 54a, 54b, 54c, 54d des Positionierkörpers 14 fluchtend zu den Bearbeitungskörpern 5, 6 oder Crimpgesenkhälften 8, 9 angeordnet werden.

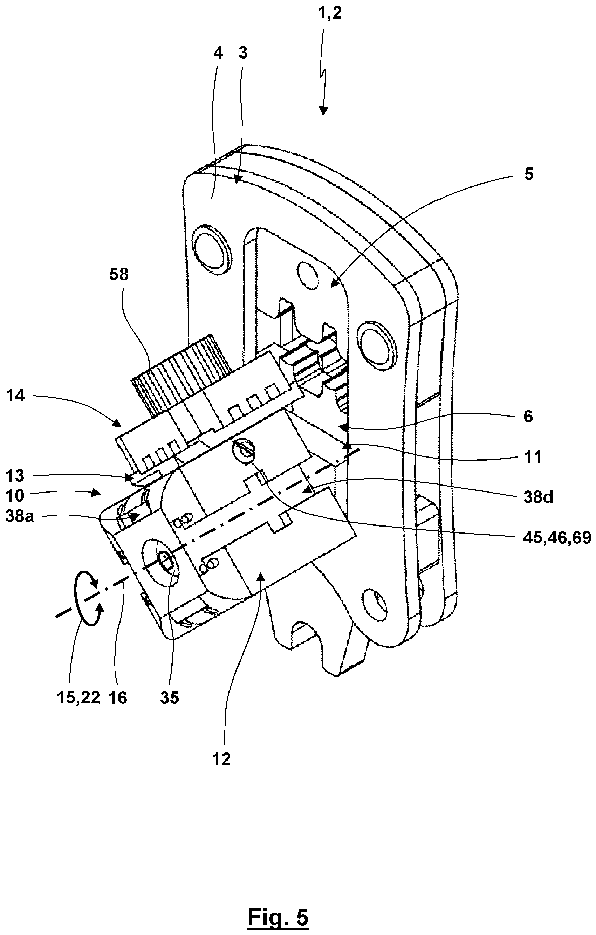

Gemäß Fig. 5 ist durch Abziehen des Haltekörpers 12 von dem Tragkörper 11 entgegen der Beaufschlagung durch die Arretierfeder 36 der Eingriff des Arretiervorsprungs 27 in den Arretierrücksprung 31 beseitigt, womit dann eine Verdrehung des Haltekörpers 12 um die Drehachse 16 möglich und herbeigeführt worden ist.

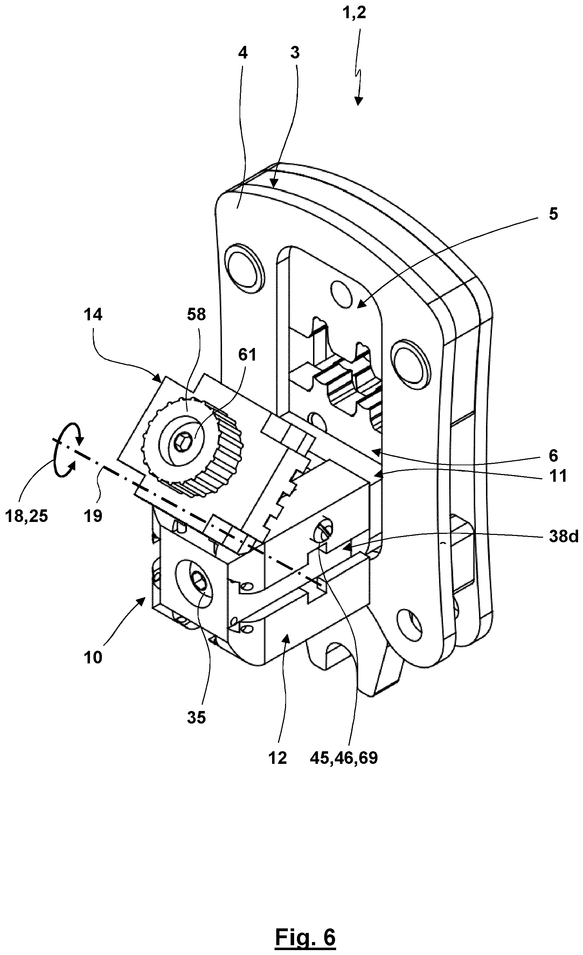

Gemäß Fig. 6 ist der T-Nutenstein 51a in seine Endstellung bewegt, womit der andere T-Nutenstein 51b exakt unterhalb der Öffnung 39 der T-Nut 38 angeordnet ist. In dieser Betriebsstellung des Schlittens 13 ist der Klapp-Freiheitsgrad 18 freigegeben und es ist ein Verklappen des Schlittens 13 (gemeinsam mit dem Positionierkörper 14) um die Klapp-Achse 19 erfolgt.

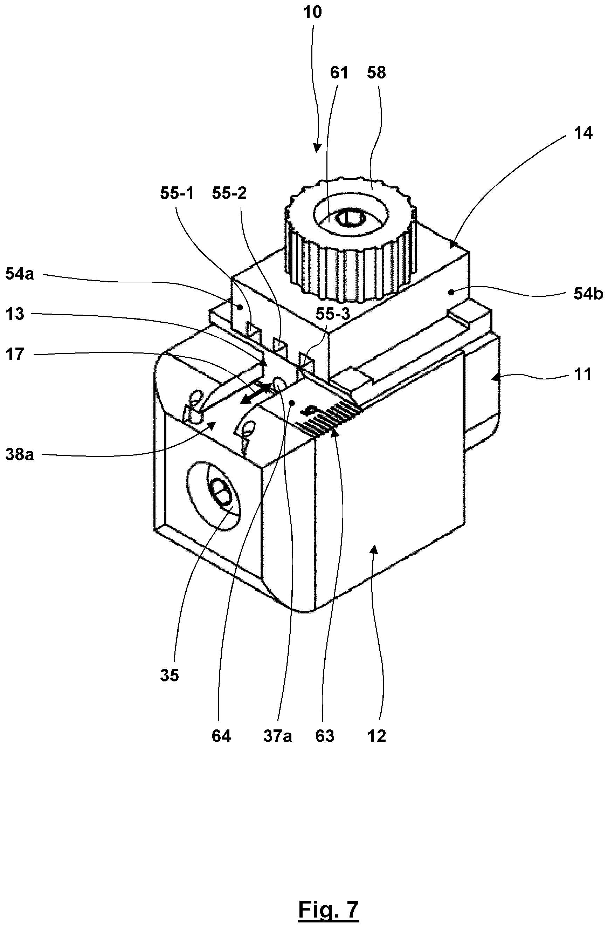

Fig. 7 zeigt eine andere Ausführungsform eines Werkstück-Locators 10. Bei ansonsten grundsätzlich dem Ausführungsbeispiel gemäß Figuren 1 bis 6 entsprechender Gestaltung verfügt hier der Haltekörper 12 im Bereich einer Seitenfläche 37a über eine Messskala 63. Anhand der Messskala 63 kann der Benutzer ablesen, welche Betriebsstellung der Schlitten 13 und damit auch der Positionierkörper 14 relativ zu dem Haltekörper 12 entlang dem Verschiebe-Freiheitsgrad 17 eingenommen hat.

Möglich ist, dass sich in Richtung des Verschiebe-Freiheitsgrads 17 durch den Schlitten 13 eine Gewindebohrung 64 erstreckt. Durch die Gewindebohrung 64 kann sich eine hier nicht dargestellte Spindel erstrecken, die drehbar, aber ohne axialen Freiheitsgrad gegenüber dem Haltekörper 12 gelagert ist. Durch manuelle Verdrehung der Spindel ist eine besonders feinfühlige Einstellung und Sicherung der Position des Schlittens 13 entlang des Verschiebe-Freiheitsgrads 17 möglich.

Möglich ist, dass, wie in Fig. 7 dargestellt, der Haltekörper 12 lediglich im Bereich einer Seitenfläche 37a eine T-Nut 38a aufweist. Des Weiteren ist für das in Fig. 7 dargestellte Ausführungsbeispiel mindestens eine Stirnflächen 54b des Positionierkörpers 14 nicht mit Aufnahmehälften 55 ausgestattet.

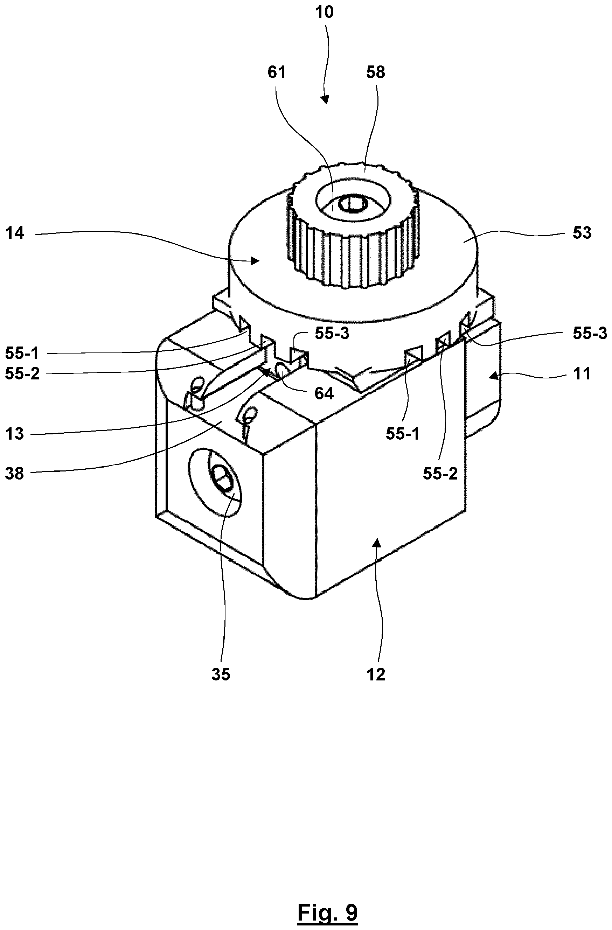

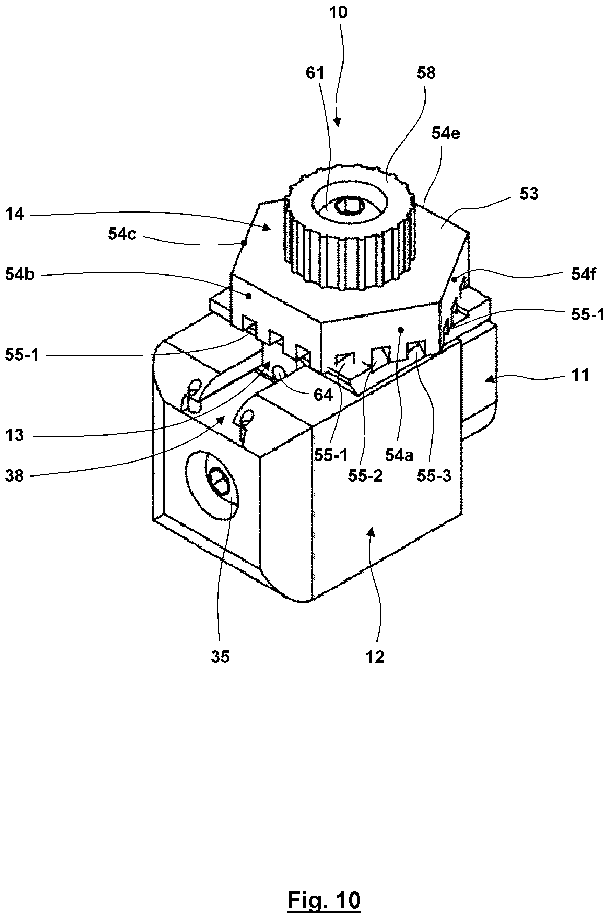

Fig. 9 und 10 zeigen Beispiele für eine abweichende Ausgestaltung des Grundkörpers 53 des Positionierkörpers 14 sowie für die Anordnung (Sätze der) der Aufnahmehälften 55 oder Aufnahmen 56 an dem Positionierkörper 14:
Gemäß Fig. 9 verfügt der Grundkörper 53 über eine zylindrische Mantelfläche. Mehrere Sätze von Aufnahmehälften 55 oder Aufnahmen 56, die jeweils den Paaren der Crimpgesenkhälften 8, 9 zugeordnet sind, sind in diesem Fall über den Umfang des Grundkörpers 53 verteilt angeordnet.

Gemäß Fig. 10 verfügt der Grundkörper 53 über eine hexagonale Geometrie, womit dann sechs Stirnflächen 54 gebildet sind, in denen dann jeweils zugeordnete Sätze von Aufnahmehälften 55 oder Aufnahmen 56 angeordnet sein können.

Fig. 11 zeigt das Einsetzen des Schlittens 13 mit dem T-Nutenstein 51a in leicht geneigtem Zustand des Schlittens 13 über die Öffnung 39 in die T-Nut 38. Der Schlitten 13 kann dann gegenüber dem Haltekörper 12 (unter Aufrechterhaltung der Neigung) entlang dem Verschiebe-Freiheitsgrad 17 in Richtung der von den Stiften 42, 43 gebildeten Anschläge bewegt werden, womit der T-Nutenstein 51a in der T-Nut 38 gleitet, während sich der T-Nutenstein 51b außerhalb der T-Nut 38 der Öffnung 39 annähert. In der Endstellung gemäß Fig. 12, in der der T-Nutenstein 51a an den Stiften 42, 43 anliegt, kann der Schlitten 13 an den Haltekörper 12 herangeklappt werden, womit der T-Nutenstein 51b durch die Öffnung in die T-Nut 38 eintritt (Übergang von Fig. 12 nach Fig. 13). Der Schlitten 13 kann nun wieder in Richtung des Werkzeugkopfes 3, also in Richtung des Tragkörpers 11 verschoben werden, wobei beide T-Nutensteine 51a, 51b in der T-Nut 38 gleitend geführt sind. In einer in Fig. 14 dargestellten Endstellung kann eine Bewegung soweit erfolgt sein, dass die sich in der Betriebsstellung befindende Stirnfläche 54 oder die in der Betriebsstellung befindliche(n) Aufnahmehälfte(n) 55 oder Aufnahme(n) 56 sogar über den Haltekörper 12 mit einem Abstand 65 hinausstehen.

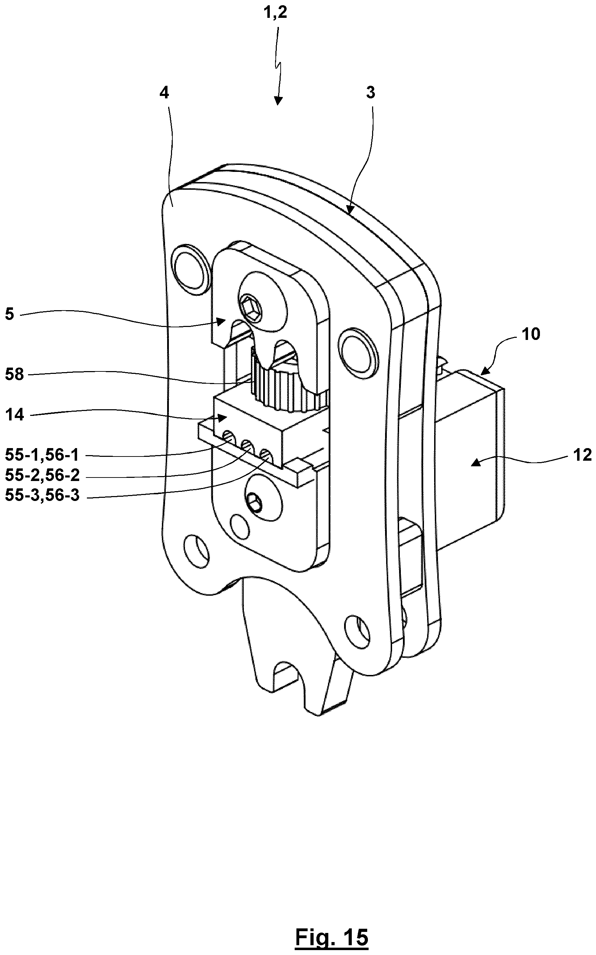

Wie in Fig. 15 zu erkennen ist, kann diese herausstehende Betriebsstellung genutzt werden dafür, dass der Positionierkörper 14 durch die geöffneten Bearbeitungskörper 5, 6 hindurchtritt, womit die Aufnahmehälften 55 und Aufnahmen 56 auf der Seite des Werkzeugkopfes 3, auf der nicht der Tragkörper 11 und der Haltekörper 12 angeordnet sind, angeordnet und zugänglich sind, sodass von dieser Seite das Einlegen des Werkstücks erfolgen kann.

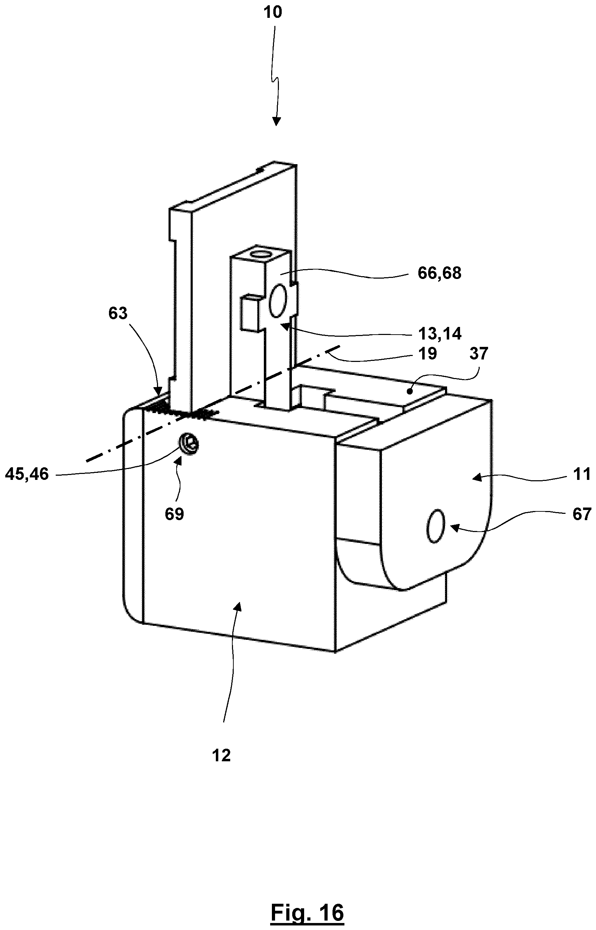

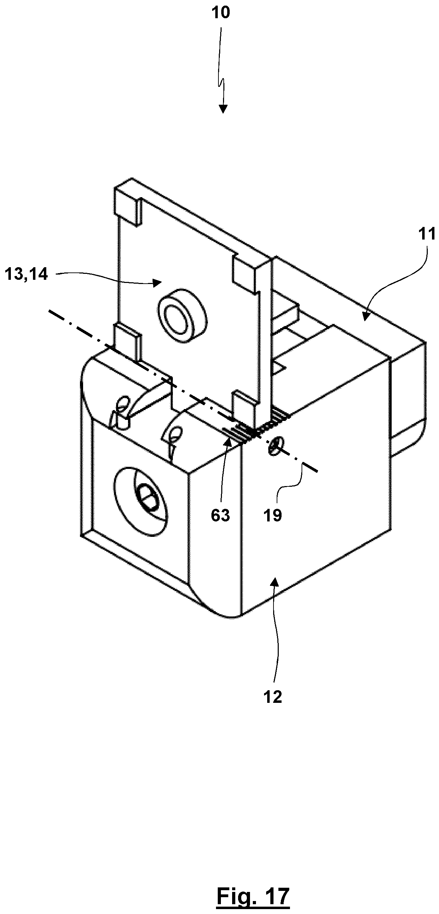

Fig. 16 und 17 zeigen eine andere Ausführungsform eines Werkstück-Locators 10, bei der der Schlitten 13 unmittelbar als Positionierkörper 14 verwendet wird. Für diese Ausführungsform ist der Schlitten 13 um die Klappachse 19 aufgeklappt derart, dass eine Unterseite 66 des Schlittens 13 parallel zur Werkzeugkopfebene orientiert ist. Die Unterseite 66 bildet in diesem Fall einen Anschlag 68 für das zu bearbeitende Werkstück. Vorzugsweise beträgt der Klappwinkel des Schlittens 13 gegenüber der Seitenfläche 37 des Haltekörpers 12 90°. Die Klappstellung ist dann über eine Arretiereinrichtung 69, insbesondere mit einem Arretierelement 45 in Form einer Madenschraube 46, gesichert.

Möglich ist, dass der Werkstück-Locator 10 ausschließlich in dieser Ausführungsform gemäß fig. 16 und 17 verwendet wird. Ebenfalls möglich ist, dass der Werkstück-Locator 10 für eine erste Anwendung in dieser Ausführungsform verwendet wird, bei der der Schlitten 13 den Positionierkörper 14 bildet. Für eine andere Anwendung kann dann an dem Schlitten 13 der Positionierkörper gemäß den zuvor erläuterten Ausführungsformen montiert werden, wobei dann vorzugsweise der Positionierkörper den Dreh-Freiheitsgrad 20 gegenüber dem Schlitten 13 aufweist.

Die Nutzung des Schlittens 13 als Positionierkörper 14 wie in den Figuren 16 und 17 dargestellt kann insbesondere zur Bereitstellung eines Anschlags 68 für ein Werkstück dienen, bei dem der Stecker als Winkelverbinder ausgebildet ist, der zwei rechtwinklige Schenkel aufweist, wobei ein Schenkel eine mit dem Kabel verpresste Hülse aufweist, während der andere Schenkel eine Bohrung für eine Befestigung an einem tragenden Kontaktelement aufweisen kann. In diesem Fall kann die Position des Winkelverbinders über den letztgenannten Schenkel vorgegeben werden, indem dieser Schenkel zur Anlage an die Unterseite 66 des Schlittens 13 kommt.

Für die dargestellten Ausführungsbeispiele ist die T-Nut 38 von dem Haltekörper 12 ausgebildet, während der Schlitten 13 den T-Nutenstein 51 aufweist. In kinematischer Umkehrung ist auch möglich, dass der Schlitten 13 die T-Nut 38 ausbildet, während dann der T-Nutenstein 51 von dem Positionierkörper 14 ausgebildet sein kann.

Bei den genannten Bauelementen, insbesondere dem Tragkörper 11, dem Haltekörper 12, dem Schlitten 13 und dem Positionierkörper 14 kann es sich um einstückige Bauelemente handeln oder um Baueinheiten aus mindestens zwei Bauelementen.

Wie zuvor erläutert können einzelne oder mehrere Freiheitsgrade entfallen. So ist beispielsweise möglich, dass der Schlitten 13 unmittelbar den Positionierkörper 14 ausbildet, wobei dann der Dreh-Freiheitsgrad 20 und/oder der Klapp-Freiheitsgrad 18 nicht vorhanden sein können. In diesem Fall bildet der Dreh-Freiheitsgrad 15 den ersten Freiheitsgrad 22, während der Verschiebe-Freiheitsgrad 17 den zweiten Freiheitsgrads 23 bildet.

Auch möglich ist, dass der Verschiebe-Freiheitsgrad 17 entfällt, wobei dann der Klapp-Freiheitsgrad 18 oder der Dreh-Freiheitsgrad 20 den zweiten Freiheitsgrad 23 bilden kann.

### BEZUGSZEICHENLISTE

- 1: Werkzeug
- 2: Crimpzange
- 3: Werkzeugkopf
- 4: Rahmen
- 5: Bearbeitungskörper
- 6: Bearbeitungskörper
- 7: Bearbeitungsrichtung
- 8: Crimpgesenkhälfte
- 9: Crimpgesenkhälfte
- 10: Werkstück-Locator
- 11: Tragkörper
- 12: Haltekörper
- 13: Schlitten
- 14: Positionierkörper
- 15: Dreh-Freiheitsgrad
- 16: Drehachse
- 17: Verschiebe-Freiheitsgrad
- 18: Klapp-Freiheitsgrad
- 19: Klappachse
- 20: Dreh-Freiheitsgrad
- 21: Drehachse
- 22: erster Freiheitsgrad
- 23: zweiter Freiheitsgrad
- 24: dritter Freiheitsgrad
- 25: vierter Freiheitsgrad
- 26: Grundkörper
- 27: Arretiervorsprung
- 28: Arretierzapfen
- 29: Lagerhülse
- 30: Gewindebohrung
- 31: Arretierrücksprung
- 32: Arretierbohrung
- 33: Durchgangsbohrung
- 34: Lager- und/oder Befestigungsbolzen
- 35: Kopf
- 36: Arretierfeder
- 37: Seitenfläche
- 38: T-Nut
- 39: Öffnung
- 40: Bohrung
- 41: Bohrung
- 42: Stift
- 43: Stift
- 44: Gewindebohrung
- 45: Arretierelement
- 46: Madenschraube
- 47: Grundkörper
- 48: Arretiervorsprung
- 49: Lagerhülse
- 50: Gewindebohrung
- 51: T-Nutenstein
- 52: Querschenkel
- 53: Grundkörper
- 54: Stirnfläche
- 55: Aufnahmehälfte
- 56: Aufnahme
- 57: Arretierrücksprung
- 58: Rändelrad
- 59: Durchgangsbohrung
- 60: Lager- und/oder Befestigungsbolzen
- 61: Kopf
- 62: Arretierfeder
- 63: Messskala
- 64: Gewindebohrung
- 65: Abstand
- 66: Unterseite
- 67: Befestigungsbereich
- 68: Anschlag
- 69: Arretiereinrichtung

## Patentansprüche

1. Werkstück-Locator (10) für ein Werkzeug (1) mit
a) einem Tragkörper (11), der Bestandteil des Werkzeugs (1) ist oder einen Befestigungsbereich (67) für die Befestigung an dem Werkzeug (1) aufweist,
b) einem Haltekörper (12), der mit einem ersten Freiheitsgrad (22) gegenüber dem Tragkörper (11) bewegbar ist, und
c) einem Positionierkörper (14), der
ca) eine Aufnahme (56) oder einen Anschlag (68) für ein mit dem Werkzeug (1) zu bearbeitendes Werkstück aufweist und
cb) mit einem zweiten Freiheitsgrad (23) gegenüber dem Haltekörper (12) bewegbar ist.

2. Werkstück-Locator (10) nach Anspruch 1, **wobei** der erste Freiheitsgrad (22) des Haltekörpers (12) ein Dreh-Freiheitsgrad (15) um eine Drehachse (16) ist, die vertikal zu einer Werkzeugkopfebene eines Werkzeugkopfes (3) des Werkzeugs (1) orientiert ist, in welcher ein Bearbeitungskörper (5, 6) über einen Arbeitshub des Werkzeugs (1), an dem der Werkstück-Locator (10) befestigbar ist, bewegt wird, wobei vorzugsweise der Haltekörper (12) einen Positionierkörper aufweist oder mindestens zwei Positionierkörper (14) aufweist, die über den Umfang des Haltekörpers (12) verteilt angeordnet sind.

3. Werkstück-Locator (10) nach Anspruch 1 oder 2, **wobei** der zweite Freiheitsgrad (23) des Positionierkörpers (14) ein Dreh-Freiheitsgrad (20) um eine Drehachse (21) ist und der Positionierkörper (14) mindestens zwei Aufnahmen (56) oder Anschläge (68) aufweist, die über den Umfang des Positionierkörpers (14) verteilt angeordnet sind.

4. Werkstück-Locator (10) nach einem der Ansprüche 1 bis 3, **wobei** der Positionierkörper (14) mit dem zweiten Freiheitsgrad (23) oder mit einem dritten Freiheitsgrad (24) gegenüber dem Haltekörper (12) bewegbar ist, wobei der zweite oder dritte Freiheitsgrad (23; 24) ein translatorischer Verschiebe-Freiheitsgrad (17) ist.

5. Werkstück-Locator (10) nach Anspruch 4, **wobei** der translatorische Verschiebe-Freiheitsgrad (17) mittels eines Schlittens (13) bereitgestellt ist, wobei vorzugsweise der translatorische Verschiebe-Freiheitsgrad (17) durch eine Arretiereinrichtung (69) arretiert werden kann.

6. Werkstück-Locator (10) nach Anspruch 5, **wobei** der translatorische Verschiebe-Freiheitsgrad (17) des Schlittens (13) einen Schlittenweg bereitstellt, der so bemessen ist, dass ein Einschieben des Positionierkörpers (14) zwischen die geöffneten Bearbeitungskörper (5, 6) des Werkzeugs (1) möglich ist, wobei vorzugsweise ein Durchschieben des Positionierkörpers (14) durch die geöffneten Bearbeitungskörper (5, 6) des Werkzeugs (1) von einer Seite des Werkzeugkopfes auf die andere Seite des Werkzeugkopfes möglich ist.

7. Werkstück-Locator (10) nach Anspruch 5 oder 6, **wobei** der Schlitten (13) in einer T-Nut (38) des Haltekörpers (12) oder des Positionierkörpers (14) geführt ist, wobei der Schlitten (13) mindestens einen T-Nutenstein (51) aufweist, der vorzugsweise in einer Montagestellung in eine Öffnung (39) der T-Nut (38) einsetzbar ist und abseits der Öffnung (39) mit dem translatorischen Verschiebe-Freiheitsgrad (17) in der T-Nut (38) geführt ist.

8. Werkstück-Locator (10) nach einem der Ansprüche 5 bis 7, **wobei** der Schlitten (13) einen Anschlag (68) für ein Werkstück bildet.

9. Werkstück-Locator (10) nach einem der Ansprüche 1 bis 8, **wobei** der Positionierkörper (14) mit dem zweiten Freiheitsgrad (23) oder einem vierten Freiheitsgrad (25) gegenüber dem Haltekörper (12) bewegbar ist, wobei der zweite oder vierte Freiheitsgrad (23; 25) ein Klapp-Freiheitsgrad (18) ist, über den der Positionierkörper (14) um eine Klappachse (19) relativ zu dem Haltekörper (12) klappbar ist.

10. Werkstück-Locator (10) nach Anspruch 9 in direkter oder indirekter Rückbeziehung auf Anspruch 7, **wobei** der oder ein in der T-Nut (38) angeordneter T-Nutenstein (51) die Klappachse (19) für den Klapp-Freiheitsgrad (18) bereitstellt.

11. Werkstück-Locator (10) nach einem der vorhergehenden Ansprüche, **wobei** mindestens einer der Freiheitsgrade (15; 17; 18; 20; 22; 23; 24; 25) über eine Arretiereinrichtung (69) arretiert werden kann.

12. Werkstück-Locator (10) nach Anspruch 2 oder einem der Ansprüche 3 bis 11 in Rückbeziehung auf Anspruch 2, **wobei**
a) der erste Freiheitsgrad (22) dadurch arretierbar und freigebbar ist, dass der Haltekörper (12) gegen die Beaufschlagung einer Arretierfeder (36) in Richtung der Drehachse (16) des ersten Freiheitsgrads (22) von dem Tragkörper (11) weg bewegbar ist von einer arretierten Stellung in eine nicht arretierte Stellung und mit der Beaufschlagung durch die Arretierfeder (36) in Richtung des Tragkörpers (11) bewegbar ist von der nicht arretierten Stellung in die arretierte Stellung, wobei
aa) in der arretierten Stellung ein Arretiervorsprung (27) des Tragkörpers (11) oder des Haltekörpers (12) in einem Arretierrücksprung (31) des Haltekörpers (12) oder Tragkörpers (11) angeordnet ist, womit der erste Freiheitsgrad (22) arretiert ist, und
ab) in der nicht arretierten Stellung der Arretiervorsprung (27) des Tragkörpers (11) oder des Haltekörpers (12) außerhalb des Arretierrücksprungs (31) des Haltekörpers (12) oder Tragkörpers (11) angeordnet ist, womit der erste Freiheitsgrad (22) freigegeben ist.

13. Werkstück-Locator (10) nach Anspruch 3 oder einem der Ansprüche 4 bis 12 in Rückbeziehung auf Anspruch 3, **wobei**
a) der zweite Freiheitsgrad (23) dadurch arretierbar und freigebbar ist, dass der Positionierkörper (14) mit und gegen die Beaufschlagung einer Arretierfeder (62) in Richtung der Drehachse (21) des zweiten Freiheitsgrads (23) verschiebbar ist zwischen einer arretierten Stellung in einer nicht arretierte Stellung, wobei
aa) in der arretierten Stellung ein Arretiervorsprung (48) des Positionierkörpers (14) oder des Haltekörpers (12) oder Schlittens (13) in einem Arretierrücksprung (57) des Haltekörpers (12), Schlittens (13) oder Positionierkörpers (14) angeordnet ist, womit der zweite Freiheitsgrad (23) arretiert ist, und
ab) in der nicht arretierten Stellung der Arretiervorsprung (48) des Positionierkörpers (14) oder des Haltekörpers (12) oder Schlittens (13) außerhalb des Arretierrücksprungs (57) des Haltekörpers (12), Schlittens (13) oder Positionierkörpers (14) angeordnet ist, womit der zweite Freiheitsgrad (23) freigegeben ist.

14. Werkstück-Locator (10) nach einem der vorhergehenden Ansprüche, wobei an einer Stirnfläche (54) des Positionierkörper (14) mehrere Aufnahmen (56) oder Anschläge (68) nebeneinander angeordnet sind.

15. Crimpwerkzeug, Presswerkzeug und/oder Abisolierwerkzeug mit einem Werkstück-Locator (10) nach einem der vorhergehenden Ansprüche.

## Geänderte Patentansprüche

### Geänderte Patentansprüche gemäss Regel 137(2) EPÜ.

1. Werkstück-Locator (10) für ein Werkzeug (1) mit
a) einem Tragkörper (11), der Bestandteil des Werkzeugs (1) ist oder einen Befestigungsbereich (67) für die Befestigung an dem Werkzeug (1) aufweist,
b) einem Haltekörper (12), der mit einem ersten Freiheitsgrad (22) gegenüber dem Tragkörper (11) bewegbar ist, und
c) einem Positionierkörper (14), der eine Aufnahme (56) oder einen Anschlag (68) für ein mit dem Werkzeug (1) zu bearbeitendes Werkstück aufweist,
**dadurch gekennzeichnet, dass**
der Positionierkörper (14) mit einem zweiten Freiheitsgrad (23) gegenüber dem Haltekörper (12) bewegbar ist.

2. Werkstück-Locator (10) nach Anspruch 1, **wobei** der erste Freiheitsgrad (22) des Haltekörpers (12) ein Dreh-Freiheitsgrad (15) um eine Drehachse (16) ist, die vertikal zu einer Werkzeugkopfebene eines Werkzeugkopfes (3) des Werkzeugs (1) orientiert ist, in welcher ein Bearbeitungskörper (5, 6) über einen Arbeitshub des Werkzeugs (1), an dem der Werkstück-Locator (10) befestigbar ist, bewegt wird, wobei vorzugsweise der Haltekörper (12) einen Positionierkörper aufweist oder mindestens zwei Positionierkörper (14) aufweist, die über den Umfang des Haltekörpers (12) verteilt angeordnet sind.

3. Werkstück-Locator (10) nach Anspruch 1 oder 2, **wobei** der zweite Freiheitsgrad (23) des Positionierkörpers (14) ein Dreh-Freiheitsgrad (20) um eine Drehachse (21) ist und der Positionierkörper (14) mindestens zwei Aufnahmen (56) oder Anschläge (68) aufweist, die über den Umfang des Positionierkörpers (14) verteilt angeordnet sind.

4. Werkstück-Locator (10) nach einem der Ansprüche 1 bis 3, **wobei** der Positionierkörper (14) mit dem zweiten Freiheitsgrad (23) oder mit einem dritten Freiheitsgrad (24) gegenüber dem Haltekörper (12) bewegbar ist, wobei der zweite oder dritte Freiheitsgrad (23; 24) ein translatorischer Verschiebe-Freiheitsgrad (17) ist.

5. Werkstück-Locator (10) nach Anspruch 4, **wobei** der translatorische Verschiebe-Freiheitsgrad (17) mittels eines Schlittens (13) bereitgestellt ist, wobei vorzugsweise der translatorische Verschiebe-Freiheitsgrad (17) durch eine Arretiereinrichtung (69) arretiert werden kann.

6. Werkstück-Locator (10) nach Anspruch 5, **wobei** der translatorische Verschiebe-Freiheitsgrad (17) des Schlittens (13) einen Schlittenweg bereitstellt, der so bemessen ist, dass ein Einschieben des Positionierkörpers (14) zwischen die geöffneten Bearbeitungskörper (5, 6) des Werkzeugs (1) möglich ist, wobei vorzugsweise ein Durchschieben des Positionierkörpers (14) durch die geöffneten Bearbeitungskörper (5, 6) des Werkzeugs (1) von einer Seite des Werkzeugkopfes auf die andere Seite des Werkzeugkopfes möglich ist.

7. Werkstück-Locator (10) nach Anspruch 5 oder 6, **wobei** der Schlitten (13) in einer T-Nut (38) des Haltekörpers (12) oder des Positionierkörpers (14) geführt ist, wobei der Schlitten (13) mindestens einen T-Nutenstein (51) aufweist, der vorzugsweise in einer Montagestellung in eine Öffnung (39) der T-Nut (38) einsetzbar ist und abseits der Öffnung (39) mit dem translatorischen Verschiebe-Freiheitsgrad (17) in der T-Nut (38) geführt ist.

8. Werkstück-Locator (10) nach einem der Ansprüche 5 bis 7, **wobei** der Schlitten (13) einen Anschlag (68) für ein Werkstück bildet.

9. Werkstück-Locator (10) nach einem der Ansprüche 1 bis 8, **wobei** der Positionierkörper (14) mit dem zweiten Freiheitsgrad (23) oder einem vierten Freiheitsgrad (25) gegenüber dem Haltekörper (12) bewegbar ist, wobei der zweite oder vierte Freiheitsgrad (23; 25) ein Klapp-Freiheitsgrad (18) ist, über den der Positionierkörper (14) um eine Klappachse (19) relativ zu dem Haltekörper (12) klappbar ist.

10. Werkstück-Locator (10) nach Anspruch 9 in direkter oder indirekter Rückbeziehung auf Anspruch 7, **wobei** der oder ein in der T-Nut (38) angeordneter T-Nutenstein (51) die Klappachse (19) für den Klapp-Freiheitsgrad (18) bereitstellt.

11. Werkstück-Locator (10) nach einem der vorhergehenden Ansprüche, **wobei** mindestens einer der Freiheitsgrade (15; 17; 18; 20; 22; 23; 24; 25) über eine Arretiereinrichtung (69) arretiert werden kann.

12. Werkstück-Locator (10) nach Anspruch 2 oder einem der Ansprüche 3 bis 11 in Rückbeziehung auf Anspruch 2, **wobei**
a) der erste Freiheitsgrad (22) dadurch arretierbar und freigebbar ist, dass der Haltekörper (12) gegen die Beaufschlagung einer Arretierfeder (36) in Richtung der Drehachse (16) des ersten Freiheitsgrads (22) von dem Tragkörper (11) weg bewegbar ist von einer arretierten Stellung in eine nicht arretierte Stellung und mit der Beaufschlagung durch die Arretierfeder (36) in Richtung des Tragkörpers (11) bewegbar ist von der nicht arretierten Stellung in die arretierte Stellung, wobei
aa) in der arretierten Stellung ein Arretiervorsprung (27) des Tragkörpers (11)oder des Haltekörpers (12) in einem Arretierrücksprung (31) des Haltekörpers (12) oder Tragkörpers (11) angeordnet ist, womit der erste Freiheitsgrad (22) arretiert ist, und
ab) in der nicht arretierten Stellung der Arretiervorsprung (27) des Tragkörpers (11) oder des Haltekörpers (12) außerhalb des Arretierrücksprungs (31) des Haltekörpers (12) oder Tragkörpers (11) angeordnet ist, womit der erste Freiheitsgrad (22) freigegeben ist.

13. Werkstück-Locator (10) nach Anspruch 3 oder einem der Ansprüche 4 bis 12 in Rückbeziehung auf Anspruch 3, **wobei**
a) der zweite Freiheitsgrad (23) dadurch arretierbar und freigebbar ist, dass der Positionierkörper (14) mit und gegen die Beaufschlagung einer Arretierfeder (62) in Richtung der Drehachse (21) des zweiten Freiheitsgrads (23) verschiebbar ist zwischen einer arretierten Stellung in einer nicht arretierte Stellung, wobei
aa) in der arretierten Stellung ein Arretiervorsprung (48) des Positionierkörpers (14) oder des Haltekörpers (12) oder Schlittens (13) in einem Arretierrücksprung (57) des Haltekörpers (12), Schlittens (13) oder Positionierkörpers (14) angeordnet ist, womit der zweite Freiheitsgrad (23) arretiert ist, und
ab) in der nicht arretierten Stellung der Arretiervorsprung (48) des Positionierkörpers (14) oder des Haltekörpers (12) oder Schlittens (13) außerhalb des Arretierrücksprungs (57) des Haltekörpers (12), Schlittens (13) oder Positionierkörpers (14) angeordnet ist, womit der zweite Freiheitsgrad (23) freigegeben ist.

14. Werkstück-Locator (10) nach einem der vorhergehenden Ansprüche, wobei an einer Stirnfläche (54) des Positionierkörper (14) mehrere Aufnahmen (56) oder Anschläge (68) nebeneinander angeordnet sind.

15. Crimpwerkzeug, Presswerkzeug und/oder Abisolierwerkzeug mit einem Werkstück-Locator (10) nach einem der vorhergehenden Ansprüche.
